# EUROPÄISCHE PATENTSCHRIFT

(11) **EP 3 603 795 B1**
(45) Veröffentlichungstag und Bekanntmachung des Hinweises auf die Patenterteilung: **06.04.2022**
(21) Anmeldenummer: 18186523.9
(22) Anmeldetag: 31.07.2018
(51) Int. Cl.: B01J 19/24

(54) **REAKTOR ZUM LEITEN VON WENIGSTENS ZWEI REAKTANTEN UND VERFAHREN ZUM HERSTELLEN EINES REAKTORS**
REACTOR FOR GUIDING AT LEAST TWO REACTANTS AND METHOD FOR PRODUCING A REACTOR.
RÉACTEUR PERMETTANT DE CONDUIRE AU MOINS DEUX SUBSTANCES RÉACTIVES ET PROCÉDÉ DE FABRICATION D'UN RÉACTEUR.

(43) Veröffentlichungstag der Anmeldung: 05.02.2020
(73) Patentinhaber: Siemens Aktiengesellschaft, 80333 München (DE)
(72) Erfinder: Jastram, Alexander, 39104 Magdeburg (DE); Kiener, Christoph, 81369 München (DE)

(56) Entgegenhaltungen:
- WO-A1-2017/146099
- US-A1- 2006 045 828
- US-A1- 2008 108 122
- US-A1- 2016 194 563
- US-A1- 2017 197 196

## Beschreibung

Reaktor zum Leiten von wenigstens zwei Reaktanten, Verfahren zum Herstellen eines Reaktors.

Die Erfindung betrifft einen Reaktor zum Leiten von wenigstens zwei Reaktanten, ein Verfahren zum Herstellen eines solchen Reaktors.

Chemische Reaktionen wie beispielsweise stark exotherme Reaktionen haben die Eigenschaft, dass sie hohe Wärmemenge freisetzen. Bei einer solchen stark exothermen chemischen Reaktion handelt es sich beispielsweise vereinfacht ausgedrückt um eine flüssig-flüssig-Reaktion von mindestens einer ersten, beispielsweise mit A bezeichneten und insbesondere flüssigen Komponente mit mindestens einer zweiten, beispielsweise mit B bezeichneten und insbesondere flüssigen Komponente zu mindestens einem beispielsweise flüssigen und mit C bezeichneten Reaktionsprodukt. Die dabei pro Zeiteinheit freigesetzte Reaktionswärme ist proportional zur Reaktionsgeschwindigkeit, die unter anderem von der Konzentration und somit von dem Vermischungsgrad der auch als Edukte oder Reaktanten bezeichneten Komponenten abhängig ist. Mit anderen Worten werden die Komponenten A und B üblicherweise auch als Reaktanten bezeichnet, wobei das Reaktionsprodukt üblicherweise auch einfach als Produkt bezeichnet wird.

Um die Reaktanten chemisch miteinander reagieren zu lassen, werden die Reaktanten miteinander vermischt. Findet dabei eine Vermischung der Reaktanten zu schnell statt, so kann die daraus resultierende Wärmefreisetzung durch die chemische Reaktion schneller sein als die Wärmeabfuhr durch Wärmeleitung beziehungsweise Konvektion innerhalb der Reaktionsmischung und Wärmeleitung durch eine Reaktorwand zu einem Kühlmittel, was zu einer Temperaturerhöhung führt. Im umgekehrten Fall, dass die Vermischung zu langsam stattfindet, können Temperaturspitzen in Folge der lokalen Reaktion nicht konvektiv abgelöst werden, was zu einer lokalen Überhitzung einer Grenzfläche zwischen den Reaktanten führt. Beide Phänomene führen zu einer Überhitzung der Reaktionsmischung und damit verbunden zu unerwünschten chemischen Nebenprodukten beziehungsweise zu thermischer Zersetzung der Edukt- und Produktmoleküle. Dies wird auch als "die Reaktion geht durch" bezeichnet. Dieser Konflikt ist lösbar durch einen vorteilhaften Vermischungsgrad bei gezielter Zudosierung beispielsweise der zweiten Komponente zu der beziehungsweise in die erste Komponente, wobei bei diesem vorteilhaften Vermischungsgrad die freigesetzte spezifische Wärmeleistung aufgrund von Mengenzuflussbegrenzung eines Reaktanten noch unkritisch ist, aber gleichzeitig lokale Erhitzungen durch zu schlechte Vermischung vermieden werden können.

Um die Reaktanten zu vermischen und somit chemisch miteinander reagieren zu lassen, kommt üblicherweise ein auch als Reaktionsapparat bezeichneter Reaktor zum Einsatz. Findet die Reaktion unter hohem Druck statt, so sollten Behälterwände eines Reaktionsapparats eine bestimmte Wandstärke haben, um ein Bersten des auch als Behälter bezeichneten Reaktionsapparats zu vermeiden. Dicke beziehungsweise große Wandstärken jedoch führen zu einem hohen thermischen Widerstand hinsichtlich eines Wärmeaustausches zwischen einem Kühlmittel und den Reaktanten und/oder dem Produkt, wodurch beispielsweise bei einer stark exothermen Reaktion eine gewünschte Wärmeabfuhr von den Reaktanten und/oder dem Produkt an das Kühlmittel erschwert wird. Sollen die Reaktanten und/oder das Produkt durch ein beispielsweise als Fluid ausgebildetes Mediums erwärmt werden, kann ein Wärmeübergang von dem Medium über den Behälter beziehungsweise über die Behälterwände an die Reaktanten und/oder das Produkt ebenfalls nur sehr schlecht erfolgen. Allgemeiner ausgedrückt kommt beispielsweise wenigstens ein insbesondere als Fluid ausgebildetes Medium zum Einsatz, durch welches eine Temperatur der Reaktanten und/oder des Produkts derart beeinflusst werden soll, dass ein Wärmeaustauch zwischen dem Medium und den Reaktanten und/oder zwischen dem Medium und dem Produkt erfolgt. Ein solcher Wärmeaustausch kann durch übermäßig große beziehungsweise dicke, auch als Wanddicken bezeichnete Wandstärken negativ beeinträchtigt werden.

Außerdem sollten Materialien, aus denen der Behälter gebildet ist, korrosionsbeständig gegen die Edukte, das Produkt sowie etwaig entstehende Nebenprodukte sowie das Medium und etwaige andere, den Behälter berührende Agentien wie etwa Reinigungs- und/oder Spülflüssigkeiten sein. Je nach chemischer Reaktivität kommen üblicherweise für die Materialien nur Sonderlegierungen wie Edelstähle, Nickelbasis-, Hafnium-, Niob-, Zirkonium- oder Tantal-Legierungen infrage, wobei diese oft schwer zu fertigen und/oder zu schweißen sind und somit die Freiheitsgrade hinsichtlich der Gestaltung des Behälters, insbesondere dessen Geometrie, limitieren.

Die Form beziehungsweise Geometrie des Reaktionsapparates hängt üblicherweise von physikalisch-chemischen Parametern der beteiligten Komponenten ab. Bei diesen physikalisch-chemischen Parametern handelt es sich beispielsweise um Wärmeleitfähigkeit und Wärmekapazität der Edukte und/oder des Produkts, des Mediums und des Werkstoffes, aus welchem der Reaktionsapparat gebildet ist. Ferner kann es sich bei den physikalisch-chemischen Parametern und fluiddynamische Eigenschaften der Edukte und des Produkts sowie um Zersetzungstemperaturen der Edukte, des Produkts und gegebenenfalls des Werkstoffes, aus welchem der Reaktionsapparat gebildet ist, handeln.

Außerdem kann die Form beziehungsweise die Geometrie des Reaktionsapparats von den Reaktionseigenschaften wie Reaktionsenthalpien, optimaler Reaktionsdruck und Temperatur, temperatur- und konzentrationsabhängige Reaktionskinetik und Existenz und Relevanz von Nebenreaktionen sowie von Prozessparametern wie beispielsweise Massenflüsse von Edukten und Medium und zusätzlicher Druckverlust abhängen.

Obwohl die Herausforderungen an einen vorteilhaften Reaktor extrem komplex sind, wird die Entwicklung von gegenwärtigen Reaktor-Konzepten hauptsächlich auf einfache Geometrien begrenzt und ist vorwiegend experimentell vorangetrieben. Nicht-optimale Reaktorgeometrien können zu verminderten Reaktionsumsätzen, unreinen Produkten, erhöhtem Kühlmitteleinsatz und größeren Reaktordimensionen führen, als dies bei einem besonders vorteilhaften beziehungsweise optimalen Design erforderlich wäre. Eine gezielte Auslegung auf die oben angeführten Parameter und deren Kombinationen gefolgt von einem gezielten Bau wird nur in sehr seltenen Fällen realisiert und dann auch meist mit Zugriff auf Standardbauteile.

US2008108122 offenbart einen Mikroreaktor und einen Separator.

Der Reaktor umfasst einen Mischbereich und einen Bereich zur Temperaturregelung der Reaktanten.

WO 2017/146099 offenbart einen Reaktor, der eine Reaktion in einem Reaktionsfluid durch Wärmeaustausch zwischen einem Wärmeträgerfluid und dem Reaktionsfluid durchführt.

Aufgabe der vorliegenden Erfindung ist es daher, einen Reaktor, ein Verfahren zum Herstellen eines solchen Reaktors und ein Verfahren zum Herstellen wenigstens eines Produkts zu schaffen, sodass zum Herstellen des Produkts wenigstens zwei Reaktanten in den Reaktor besonders vorteilhaft chemisch miteinander reagieren können.

Diese Aufgabe wird erfindungsgemäß durch die Gegenstände der jeweiligen unabhängigen Patentansprüche gelöst. Vorteilhafte Ausgestaltungen mit zweckmäßigen Weiterbildungen der Erfindung sind in den übrigen Ansprüchen angegeben.

Ein erster Aspekt der Erfindung betrifft einen Reaktor zum Leiten beziehungsweise Führen von wenigstens zwei Reaktanten, welche auch als Edukte oder Reaktanden bezeichnet werden. Unter dem Merkmal, dass der Reaktor zum Leiten beziehungsweise Führen der Reaktanten verwendet wird, ist insbesondere zu verstehen, dass die Reaktanten in den Reaktor eingeleitet beziehungsweise eingeführt werden und zumindest einen Teil des Reaktors, insbesondere den vollständigen Reaktor, durchströmen. Auf ihrem Weg zumindest durch den Teilbereich des Reaktors werden die Reaktanten durch den Reaktor geführt beziehungsweise geleitet, sodass sich beispielsweise die Reaktanten nicht unkontrolliert in einer Umgebung beziehungsweise in einem Raum, in welcher beziehungsweise in welchem sich die Reaktanten und der Reaktor befinden, unkontrolliert verteilen. Wie im Folgenden noch genauer erläutert wird, wird der Reaktor genutzt, um eine chemische Reaktion, insbesondere eine exotherme chemische Reaktion, zwischen den Reaktanten stattfinden beziehungsweise ablaufen zu lassen und/oder zu bewirken. Bei der chemischen Reaktion reagieren die Reaktanten zu wenigstens einem Produkt. Ein erster der Reaktanten und/oder der zweite Reaktant kann flüssig sein und somit in flüssigem Zustand mit dem jeweils anderen Reaktanten reagieren. Ferner ist es denkbar, dass das Produkt flüssig ist. Beispielsweise wird der erste und/oder zweite Reaktant in flüssigem Zustand in den Reaktor eingeleitet und/oder das Produkt wird in flüssigem Zustand aus dem Reaktor ausgeleitet.

Der Reaktor weist wenigstens einen sich länglich erstreckenden und somit beispielsweise eine Längserstreckung aufweisenden Reaktionskanal auf, wobei der Reaktionskanal entlang seiner länglichen Erstreckung von dem ersten Reaktanten durchströmbar ist beziehungsweise durchströmt wird. Mit anderen Worten ist der Reaktionskanal, in welchem die Reaktion stattfindet, länger gestreckt insbesondere im Sinne eines Rohrreaktors, sodass der Reaktionskanal beispielsweise rohrartig ausgebildet ist. Unter dem Merkmal, dass sich der Reaktionskanal länglich erstreckt und somit eine längliche Erstreckung aufweist, ist zu verstehen, dass der Reaktionskanal entlang einer Strömungsrichtung, entlang welcher der erste Reaktant durch den Reaktionskanal hindurchströmen kann, länger ist beziehungsweise eine längere oder größere Erstreckung aufweist als in einer jeweiligen, senkrecht zur Strömungsrichtung verlaufenden Ebene beziehungsweise als in zwei senkrecht zueinander und senkrecht zur Strömungsrichtung verlaufende weitere Richtungen. Wieder mit anderen Worten ausgedrückt ist der Reaktionskanal, insbesondere entlang seiner länglichen Erstreckung beziehungsweise entlang der Strömungsrichtung, länger als hoch und breit. Unter dem Merkmal, dass der Reaktionskanal von dem ersten Reaktant durchströmbar ist, ist zu verstehen, dass der erste Reaktant in den Reaktionskanal einleitbar beziehungsweise eingeleitet wird. Mit anderen Worten ist der Reaktionskanal mit dem ersten Reaktanten versorgbar, indem der erste Reaktant in den Reaktionskanal einleitbar ist beziehungsweise eingeleitet wird. Dabei kann der erste Reaktant zumindest einen Teilbereich, insbesondere zumindest einen überwiegenden Teil, des Reaktionskanals oder aber den vollständigen Reaktionskanal durchströmen. Im Rahmen eines Verfahrens zum Herstellen des zuvor beschriebenen Produkts wird der erste Reaktant beispielsweise in den Reaktionskanal eingeleitet und strömt zumindest durch einen Teilbereich des Reaktionskanals. Dabei muss der erste Reaktant nicht notwendigerweise durch den gesamten Reaktionskanal hindurchströmen und somit an einem ersten Ende des Reaktionskanals in den Reaktionskanal eingeleitet und an einem dem ersten Ende gegenüberliegenden zweiten Ende des Reaktionskanals aus dem Reaktionskanal ausgeleitet werden, da beispielsweise der erste Reaktant auf seinem Weg durch den Reaktionskanal beziehungsweise zumindest durch den Teilbereich des Reaktionskanals mit dem zweiten Reaktanten zu dem Produkt chemisch reagieren kann, sodass an dem zweiten Ende nicht oder nicht nur der erste Reaktant, sondern bezogen auf die Reaktanten und das Produkt beispielsweise lediglich das Produkt aus dem Reaktionskanal ausströmt beziehungsweise aus dem Reaktionskanal abgeführt wird.

Der Reaktor weist darüber hinaus wenigstens einen von dem zweiten Reaktanten durchströmbaren Zuführkanal auf, welcher über mehrere, voneinander beabstandete und von jeweiligen Teilströmen des zweiten Reaktanten durchströmbare und auch als Durchströmöffnungen bezeichnete Durchgangsöffnungen fluidisch mit dem Reaktionskanal verbunden ist. Ferner sind die jeweiligen Teilströme des zweiten Reaktanten und somit der zweite Reaktant über die Durchgangsöffnungen dem Reaktionskanal und dadurch dem ersten Reaktanten zuführbar. Mit anderen Worten kann der zweite Reaktant in Form der Teilströme die Durchgangsöffnungen durchströmen und dadurch aus dem Zuführkanal aus- und in den Reaktionskanal einströmen. Dadurch wird in dem Reaktionskanal und somit in dem Reaktor die zuvor genannte chemische und vorzugsweise exotherme Reaktion der Reaktanten ablaufen gelassen, sodass die Reaktanten in dem Reaktionskanal und somit in dem Reaktor zumindest zu dem auch als Reaktionsprodukt bezeichneten Produkt reagieren.

Unter dem Merkmal, dass der Zuführkanal von dem zweiten Reaktanten durchströmbar ist, ist zu verstehen, dass der zweite Reaktant in den Zuführkanal einleitbar ist beziehungsweise eingeleitet wird, sodass der Zuführkanal mit dem zweiten Reaktanten versorgbar ist beziehungsweise versorgt wird. Insbesondere wird beispielsweise der zweite Reaktant an wenigstens oder genau einer Stelle in den Zuführkanal eingeleitet. Jeweilige Teile, insbesondere in Form der Teilströme, des zweiten Reaktanten können dann beispielsweise von der Stelle zu der jeweiligen Durchgangsöffnung strömen und durch die Durchgangsöffnung hindurchströmen und dadurch aus dem Zuführkanal aus- und in den Reaktionskanal einströmen. Hierdurch werden die Reaktanten in dem Reaktionskanal miteinander vermischt, sodass beziehungsweise wodurch es zu der zuvor genannten chemischen Reaktion zwischen den Reaktanten zu dem Produkt kommt. Reagiert beispielsweise eine erste Teilmenge des ersten Reaktanten und/oder eine zweite Teilmenge des zweiten Reaktanten im Rahmen der chemischen Reaktion nicht zu dem gewünschten, auch als Hauptprodukt bezeichneten Produkt und nicht zu einem von dem Produkt unterschiedlichen Nebenprodukt, so wird die jeweilige Teilmenge an dem zuvor genannten zweiten Ende des Reaktionskanals aus dem Reaktionskanal abgeführt. Kommt es im Rahmen der chemischen Reaktion beispielsweise zu einer Entstehung des Nebenprodukts, so wird das Nebenprodukt an dem zweiten Ende aus dem Reaktionskanal abgeführt. Dadurch, dass die Durchgangsöffnungen voneinander beabstandet sind, wird der zweite Reaktant in Form der Teilströme in den Reaktionskanal geleitet und mit dem ersten Reaktanten vermischt, wobei der zweite Reaktant an voneinander beabstandeten Einleitstellen, an denen die Durchgangsöffnungen angeordnet sind, in den Reaktionskanal und somit in den ersten Reaktanten eingeleitet wird und somit mit dem ersten Reaktanten reagiert. Hierdurch kann eine besonders vorteilhafte Vermischung der Reaktanten miteinander realisiert werden, sodass die Reaktanten jeweils zumindest nahezu vollständig zu dem Produkt chemisch reagieren und sodass beispielsweise die Entstehung eines unerwünschten Nebenprodukts zumindest nahezu vollständig unterbleibt. Somit wird beispielsweise an dem zweiten Ende des Reaktionskanals bezogen auf die Reaktanten und bezogen auf das Produkt lediglich das Produkt aus dem Reaktionskanal abgeführt, und es existiert auch kein Nebenprodukt, das an dem zweiten Ende aus dem Reaktionskanal abgeführt wird beziehungsweise abgeführt werden müsste.

Des Weiteren weist der Reaktor wenigstens einen den Reaktionskanal umgebenden Mediumkanal auf, welcher von wenigstens einem Medium durchströmbar ist. Das Medium wird beispielsweise in den Mediumkanal eingeleitet und durchströmt vorzugsweise den gesamten Mediumkanal und wird daraufhin wieder aus dem Mediumkanal abgeleitet beziehungsweise abgeführt. Durch das Medium wird in Folge eines Wärmeaustausches mit dem Reaktionskanal zumindest eine Temperatur des Reaktionskanals beeinflusst. Mit anderen Worten ist durch das Medium in Folge eines Wärmeaustausches mit dem Reaktionskanal, das heißt in Folge eines Wärmeaustausches zwischen dem Medium und dem Reaktionskanal zumindest eine Temperatur des Reaktionskanals beeinflussbar. Hierunter ist zu verstehen, dass der Reaktionskanal durch das Medium erwärmt und/oder gekühlt werden kann. Das Erwärmen und/oder Kühlen des Reaktionskanals wird auch als Temperieren des Reaktionskanals bezeichnet, sodass der Mediumkanal auch als Temperierkanal bezeichnet werden kann. Im Rahmen der vorliegenden Erfindung ist unter "Temperieren" des Rektionskanals zu verstehen, dass der Reaktionskanal beispielsweise einfach erwärmt beziehungsweise geheizt oder gekühlt wird. Ein Steuern oder Regeln der Temperatur des Reaktionskanals ist nicht notwendigerweise unter dem Begriff "Temperieren" zu verstehen. Mit anderen Worten ist vorliegend unter "Temperieren" zu verstehen, dass wenigstens eine Temperatur des Reaktionskanals verändert beziehungsweise beeinflusst wird, insbesondere auch ohne dass die Temperatur des Reaktionskanals gezielt geregelt oder gesteuert wird. Der Begriff "Temperieren" ist also insbesondere als ein Oberbegriff zu verstehen, unter welchem "Kühlen und/oder Erwärmen" verstanden wird beziehungsweise welcher durch "Kühlen und/oder Erwärmen" ersetzt werden kann.

Ferner ist unter dem Merkmal, dass der Reaktionskanal durch das Medium gekühlt und/oder erwärmt werden kann, zu verstehen, dass der in dem Reaktionskanal aufgenommene beziehungsweise zumindest einen Teilbereich des Reaktionskanals durchströmende erste Reaktant und/oder der in dem Reaktionskanal aufgenommene und/oder zumindest einen Teilbereich des Reaktionskanals durchströmende zweite Reaktant und/oder das Produkt temperiert, das heißt durch das Medium erwärmt und/oder gekühlt werden kann. Da die Teilströme durch die Durchgangsöffnung hindurch und somit in den Reaktionskanal einströmen beziehungsweise einströmen können, kann der zweite Reaktant beispielsweise zumindest einen Teilbereich des Reaktionskanals durchströmen.

Im Folgenden werden die Reaktanten und das Produkt zusammenfassend als Stoffe bezeichnet. Um beispielsweise den Reaktionskanal sowie gegebenenfalls zumindest einen der Stoffe durch das Medium zu erwärmen, erfolgt beispielsweise ein Wärmeübergang von dem Medium an den Reaktionskanal beziehungsweise an den zumindest einen Stoff. Hierbei fungiert das Medium als Heizmedium. Insbesondere dann, wenn es sich bei der chemischen Reaktion um eine exotherme, insbesondere um eine stark exotherme, Reaktion handelt, ist es von Vorteil, den Reaktionskanal und dabei beispielsweise den zumindest einen Stoff zu kühlen. Hierzu erfolgt ein Wärmeübergang von dem Reaktionskanal beziehungsweise von dem zumindest einen Stoff an das Medium. Dann fungiert das Medium als ein Kühlmedium. Vorzugsweise ist das Medium eine Flüssigkeit. Dabei kann das Medium zumindest zum Teil, insbesondere zumindest überwiegend, Wasser aufweisen oder vollständig aus Wasser gebildet sein.

Bei dem erfindungsgemäßen Reaktor ist es möglich, eine Außenwand des auch als Reaktionsapparat bezeichneten Reaktors sehr dick auszuführen, um hierdurch eine hohe Druckfestigkeit, das heißt eine besonders druckfeste und druckführende Umschließung zu realisieren. Gleichzeitig kann dadurch, dass der Mediumkanal den Reaktionskanal umgibt, das heißt um den Reaktionskanal herum verläuft, ein besonders vorteilhafter Wärmeaustauch beziehungsweise Wärmeübergang zwischen dem Reaktionskanal und dem Medium gewährleistet werden, sodass übermäßig geringe oder aber übermäßig hohe Temperaturen und somit Temperaturspitzen des Reaktionskanals beziehungsweise in dem Reaktionskanal sicher vermieden werden können. In der Folge kann das Produkt in dem und durch den Reaktor besonders vorteilhaft hergestellt werden, insbesondere ohne dass es zur unerwünschten Entstehung von unerwünschten Nebenprodukten kommt.

Dadurch, dass die Durchgangsöffnungen voneinander beabstandet sind, ist eine mehrfache Zuspeisung des zweiten Reaktanten in den Reaktionskanal realisierbar, sodass er zweite Reaktant in Form der beispielsweise als Massenströme ausgebildeten Teilströme anstelle in Form eines großen gesamten Gesamtstroms in den Reaktionskanal eingeleitet und dadurch in dem ersten Reaktanten verteilt wird. Dadurch wird die beispielsweise schnell ablaufende chemische Reaktion gegenüber einem herkömmlichen Reaktionsapparat, in welchem der zweite Reaktant in Form genau eines Gesamtmassenstroms dem ersten Reaktanten zugeführt wird, über eine längere Strecke verteilt, sodass ein aus dem Einleiten des zweiten Reaktanten in den Reaktionskanal und aus dem Vermischen der Reaktanten resultierendes Reaktionsgemisch zumindest nahezu kontinuierlich temperiert, insbesondere gekühlt, werden kann. Außerdem wird durch die mehrfache Zuspeisung bewirkt, dass der erste Reaktant lokal in einem stöchiometrischen Überschuss vorhanden ist. Dabei wirken der lokal im stöchiometrischen Überschuss vorhandene erste Reaktant und das produzierte Produkt als Wärmeträger, um beispielsweise kritische Temperaturspitzen vermeiden beziehungsweise reduzieren zu können. Da der Reaktionskanal von dem beispielsweise als Kühlmittelkanal fungierenden Medienkanal umgeben ist, wird etwaig bei der Reaktion frei werdende Wärme so direkt wie möglich von beziehungsweise aus dem Reaktionskanal abgeführt. An dem zweiten Ende des Reaktionskanals ist die chemische Reaktion zwischen den Reaktanten zumindest nahezu vollständig, und es liegt daher weder ein Überschuss des ersten Reaktanten noch des zweiten Reaktanten vor. Außerdem ist der Reaktionskanal dadurch, dass der Reaktionskanal von dem Mediumkanal umgeben ist, in einen Strom beziehungsweise in eine Strömung des als Kühl- oder Heizmedium beziehungsweise als Temperiermittel fungierenden Medium eingebettet, wobei das Medium beispielsweise in einem Gegen- oder Gleichstrom zu dem den Zuführkanal durchströmenden zweiten Reaktanten den Mediumkanal durchströmt beziehungsweise in dem Mediumkanal geführt wird.

Der Erfindung liegt dabei insbesondere die folgende Erkenntnis zugrunde: Um herkömmlicher Weise eine hohe Druckfestigkeit zu realisieren, weisen herkömmliche Reaktionsapparate keine Rohrdurchmesser bei einer sehr dicken Wandstärke auf. Um übermäßige Korrosion zu vermeiden, kommen üblicherweise Sonderlegierungen wie Edelstähle, Nickelbasis-Legierungen, Niob, Tantal, Zirkonium, Keramiken und Aluminiumoxid, Titandioxid, Siliziumkarbid und/oder andere aufwändige Werkstoffe zum Einsatz. Derartige Sonderlegierungen sind sehr häufig schwer zu bearbeiten, insbesondere im Hinblick auf eine präzise Strukturierung, sodass oft nur sehr schlichte Formen zur Anwendung kommen. Üblicherweise sind herkömmliche Reaktionsapparate, insbesondere deren geometrische Gestaltung, experimentell vorangetrieben, sodass Reaktionsapparate, welche sich also vorteilhaft erwiesen haben, weiter benutzt oder einfach im Rahmen einer Standardisierung skaliert werden. Eine individuelle Auslegung findet fast nicht statt, da eine personell sehr aufwändige Kette von Prozessen zu durchlaufen ist.

Einer Überhitzung wird üblicherweise durch eine axiale Verteilung der Reaktion durch Kreuzstrom oder durch den Einsatz mehrerer Reaktoren insbesondere in Form einer Kaskade gegebenenfalls mit dem Einsatz einer Zwischenkühlung entgegengewirkt. Ferner kommen üblicherweise kurze thermische Transportwege und somit kleine Reaktoren sowie eine Parallelisierung und/oder hohe spezifische Oberflächen und/oder eine verdünnte Reaktion mit einem Wärmeträgermedium zum Einsatz. Im letzteren Beispiel entstehen neben regelmäßigen Anschaffungs- und Entsorgungskosten für den Wärmeträger zusätzliche apparative und energetische Kosten für die Stofftrennung, falls eine hohe Produktreinheit gewünscht ist.

Die zuvor genannten Probleme und Nachteile können bei dem erfindungsgemäßen Reaktor vermieden werden. Insbesondere zeichnet sich der erfindungsgemäße Reaktor durch ein parametrisches Design beziehungsweise durch ein parametrisiertes Design aus. Dies bedeutet, dass vorzugsweise der komplette Reaktor, insbesondere dessen komplette Geometrie, parametrisch ausgelegt ist, sodass die auch als Reaktorgeometrie bezeichnete Geometrie des Reaktors an die Reaktion, einen vorteilhaften Wärmeaustausch, insbesondere an eine vorteilhafte Wärmeabfuhr, an ein Mischungsverhalten und an fluiddynamische Eigenschaften der Stoffe auf einfache und kostengünstige Weise anpassbar ist.

Unter dem Merkmal, dass der Reaktor beziehungsweise dessen Reaktorgeometrie parametrisch ausgelegt ist, ist zu verstehen, dass Parameter, die die Reaktorgeometrie kennzeichnen und charakterisieren, auf besonders einfache und kostengünstige Weise verändert werden können, wodurch die Reaktorgeometrie besonders einfach und somit kostengünstig geändert und an jeweilige Anforderungen beziehungsweise Wünsche angepasst werden kann.

In vorteilhafter Ausgestaltung der Erfindung ist der Zuführkanal in einer auch als Zuführrichtung bezeichneten Strömungsrichtung von dem zweiten Reaktanten durchströmbar, wobei die Durchgangsöffnungen entlang der Strömungsrichtung voneinander beabstandet und dabei vorzugsweise voneinander getrennt sind. Hierdurch können die Teilströme besonders vorteilhaft verteilt in den Reaktionskanal und somit in den ersten Reaktanten eingeleitet werden. Unter dem Merkmal, dass die Durchgangsöffnungen, insbesondere entlang der Zuführrichtung, voneinander getrennt sind, ist zu verstehen, dass die Durchgangsöffnungen beispielsweise durch jeweilige Wandungen oder Wandungsbereiche eines den Zuführkanal zumindest teilweise, insbesondere zumindest überwiegend oder vollständig, begrenzenden Zuführkanalelements begrenzt sind. Dabei sind zumindest jeweilige Teile der Wandungsbereiche zwischen den jeweiligen Durchgangsöffnungen an sich angeordnet, wodurch die Durchgangsöffnungen voneinander getrennt sind.

Bei einer weiteren vorteilhaften Ausgestaltung der Erfindung ist der Reaktor einstückig ausgebildet. Dies bedeutet beispielsweise, dass der, insbesondere gesamte, Reaktor durch ein einziges, integrales und somit einstückiges Bauteil ausgebildet und somit an beziehungsweise aus einem Stück gebildet ist. Wieder mit anderen Worten ausgedrückt ist der Reaktor nicht aus mehreren, separat voneinander ausgebildeten und somit miteinander verbundenen Bauteilen zusammengebaut, sondern der Reaktor ist als ein Monolith ausgebildet beziehungsweise durch einen Monolithen gebildet. Dieser Monolith bildet vorzugsweise alle Bauelemente, Teile beziehungsweise Bereiche des Reaktors. Wieder mit anderen Worten ausgedrückt ist der Reaktor somit vorzugsweise ein Monolith, dessen Bauraumbedarf und Kosten in einem besonders geringen Rahmen gehalten werden können. Außerdem können Dichtungsprobleme vermieden werden, da keine Verbindungsstellen vorgesehen sind, an denen separat voneinander ausgebildete Bauteile miteinander verbunden sind. Somit müssen keine Verbindungsstellen aufwändig abgedichtet werden.

Um auch besonders komplexe und somit beispielsweise für die Reaktion vorteilhafte Geometrien des Reaktors auf einfache und kostengünstige Weise herstellen zu können, ist es in weiterer Ausgestaltung der Erfindung vorgesehen, dass der Reaktor durch ein generatives Fertigungsverfahren, das heißt durch generative Fertigung, hergestellt ist. Der Reaktor ist somit derart entwickelt und parametrisiert, dass der Reaktor ohne Stützstrukturen generativ konstruierbar und somit herstellbar ist. Beispielsweise ist beziehungsweise wird der Reaktor durch 3D-Drucken beziehungsweise durch ein Pulverbettverfahren hergestellt und dabei beispielsweise entlang einer auch als Z-Druckrichtung bezeichneten Druckrichtung gedruckt. Entlang der Druckrichtung wird der Reaktor beispielsweise Stück für Stück aufgebaut und dabei vorzugsweise einstückig hergestellt. Vorzugsweise ist der minimale Bauwinkel in Z-Druckrichtung bezüglich einer Anlage, in welcher beispielsweise durch welche das generative Fertigungsverfahren durchgeführt wird, steiler als 45 Grad gehalten. Neben der geometrischen Freiheit ermöglicht diese Fertigungsform die Einbettung wenigstens einer Gitterstruktur im Inneren des Reaktors.

Bei dem generativen Fertigungsverfahren handelt es sich vorzugsweise um Pulverbettschmelzen, insbesondere um selektives Laserschmelzen wie beispielsweise DMLM (direct metal laser melting - direktes Metalllaserschmelzen).

Um die Temperatur des Reaktionskanals besonders vorteilhaft beeinflussen und dabei den Bauraumbedarf des Reaktionskanals besonders gering halten zu können, ist es in weiterer Ausgestaltung der Erfindung vorgesehen, dass sich der Reaktionskanal, insbesondere entlang seiner länglichen Erstreckung, helixförmig erstreckt. Somit weist der Reaktionskanal eine Helixform auf beziehungsweise der Reaktionskanal bildet eine Helixform oder eine Helix. Die Helix wird auch als Schraube, Schraubenlinie, zylindrische Spirale oder Wende bezeichnet und ist eine oder folgt einer Kurve, die sich beispielsweise mit konstanter Steigung um einen Mantel eines insbesondere gedachten Zylinders windet. Somit folgt beispielsweise der Reaktionskanal, insbesondere dessen längliche Erstreckung, der zuvor beschriebenen Kurve, zumindest global.

Um dabei einen besonders vorteilhaften Wärmeaustausch zwischen dem Reaktionskanal und dem Medium realisieren zu können, ist es in weiterer Ausgestaltung der Erfindung vorgesehen, dass sich der Reaktionskanal helixförmig um zumindest einen Längenbereich des Zuführkanals erstreckt.

Dabei hat es sich als besonders vorteilhaft gezeigt, wenn zumindest der Längenbereich des Zuführkanals geradlinig, das heißt entlang einer oder parallel zu einer Geraden verläuft. Durch die Helixform des Reaktionskanals kann eine effektive Länge des Reaktors gering gehalten werden, wobei eine Zuspeisung des zweiten Reaktanten in den Reaktionskanal und somit in den ersten Reaktanten direkt aus einer Reaktorachse erfolgen kann. Die Reaktorachse fällt beispielsweise mit einer Mittellinie, beziehungsweise mit einer Symmetrieachse zusammen, wobei sich die Mittelinie beziehungsweise die Symmetrieachse in radialer Richtung der Helix in deren Mitte befindet. Durch die Helixform ist der Reaktionskanal gekrümmt. Diese Krümmung bewirkt eine Fliehkraft in den ersten Reaktanten senkrecht zur Reaktorachse, wobei die Fliehkraft proportional zu einer Geschwindigkeit ist, mit welcher beispielsweise der erste Reaktant durch den Reaktionskanal hindurch strömt. Der erste Reaktant und/oder der zweite Reaktant ist ein Fluid, insbesondere eine Flüssigkeit, sodass beispielsweise die zuvor genannte Geschwindigkeit eine Fluidgeschwindigkeit ist. Die Fliehkraft wird mit kleinerem Durchmesser der Helix verstärkt. In Folge der Fliehkraft werden Dean-Wirbel in dem Reaktionskanal, insbesondere in dessen Querschnitt erzeugt, wobei die Dean-Wirbel zu einer besonders vorteilhaften Vermischung der Reaktanten miteinander beitragen.

Bei einer besonders vorteilhaften Ausführungsform der Erfindung ist es vorgesehen, dass jeweilige Windungen des helixförmigen und dadurch eine Windungsrichtung aufweisenden Reaktionskanals entlang der Windungsrichtung und/oder schräg zur Windungsrichtung und/oder senkrecht zur Windungsrichtung wellenförmig verlaufen. Dadurch kann eine besonders große Länge des Reaktionskanals realisiert werden, wobei gleichzeitig die äußeren Abmessungen des Reaktors beziehungsweise dessen effektive Länge gering gehalten werden können beziehungsweise kann. Außerdem kann dadurch ein besonders vorteilhafter Wärmeaustausch zwischen dem Reaktionskanal und dem Medium gewährleistet werden.

In weiterer Ausgestaltung der Erfindung weist der Reaktor in dem Reaktionskanal wenigstens eine Mischeinrichtung zum, insbesondere passiven, Vermischen des ersten Reaktanten mit dem zweiten Reaktanten auf. Darunter ist insbesondere zu verstehen, dass der zuvor genannte Monolith die Mischeinrichtung bildet. Durch die Mischeinrichtung kann sichergestellt werden, dass der zumindest nahezu gesamte erste Reaktant mit dem zumindest nahezu gesamten zweiten Reaktanten zu dem Produkt reagiert.

Um die Reaktanten besonders vorteilhaft vermischen zu können, weist die Mischeinrichtung beispielsweise wenigstens ein Leitelement, insbesondere wenigstens ein Leitblech, und/oder wenigstens einen Turbulenzerzeuger und/oder wenigstens einen Turbulator auf. Die Mischeinrichtung wird auch als Mischungsstruktur, insbesondere als passive Mischungsstruktur, bezeichnet. Unter der passiven Mischungsstruktur beziehungsweise darunter, dass die Mischeinrichtung zum passiven Vermischen der Reaktanten genutzt wird, ist zu verstehen, dass die Mischeinrichtung nicht etwa ein oder mehrere Mischteile aufweist, die relativ zu wenigstens einem weiteren Bauelement des Reaktors bewegt werden beziehungsweise bewegbar sind, sondern vorzugsweise ist die Mischeinrichtung einstückig mit dem übrigen Reaktant ausgebildet, sodass der Monolith auch die Mischeinrichtung bildet. Dabei werden die Reaktanten beispielsweise dadurch miteinander vermischt, dass die Reaktanten gegen und um die Mischeinrichtung strömen und dadurch abgelenkt beziehungsweise umgelenkt und in der Folge miteinander vermischt werden. Die Mischeinrichtung verhält sich somit passiv und wird lediglich von den Reaktanten an- und umströmt, um dadurch ein Vermischen der Reaktanten miteinander zu bewirken.

Das Vermischen innerhalb des Reaktionskanals beeinflusst eine Wärmeaustausch mit einer den Reaktionskanal zumindest teilweise, insbesondere zumindest überwiegend oder vollständig, begrenzenden Kanalwand, insbesondere eine Wärmeübertragung zu der Kanalwand. Ferner beeinflusst die Vermischung die Reaktionsgeschwindigkeit und die Ablösung von Temperaturspitzen. Vorzugsweise erfolgt die Vermischung durch passive Mechanismen, insbesondere durch Mischungsstrukturen, bei denen der Mischungsgrad und die Mischungscharakteristik parametrisch einstellbar ist. Die passive Mischung kann beispielsweise durch einen Verlauf beziehungsweise eine Form des Reaktionskanals selbst erfolgen. Hierbei kann der Reaktionskanal serpentinenartig beziehungsweise serpentinenförmig, sinusförmig und/oder zick-zack-förmig verlaufen. Der zuvor beschriebene wellenförmige Verlauf des Reaktionskanals kann somit auch zu einer besonders vorteilhaften Vermischung der Reaktanten beitragen.

Als weiterhin besonders vorteilhaft hat es sich gezeigt, wenn der Reaktionskanal in wenigstens einem Längen- oder Teilbereich einen sich entlang der länglichen Erstreckung des Reaktionskanals verändernden beziehungsweise variierenden und von dem ersten Reaktanten durchströmbaren Querschnitt aufweist. Insbesondere kann der Querschnitt düsenartig ausgebildet sein, um dadurch eine vorteilhafte Vermischung der Reaktanten zu bewirken. Unter dem Merkmal, dass der Querschnitt variiert beziehungsweise sich verändert, ist zu verstehen, dass der Querschnitt alterniert, das heißt dass der Querschnitt auch als alternierender Querschnitt bezeichnet wird.

Alternativ oder zusätzlich ist es denkbar, dass die passive Mischung durch interne fluidleitende Elemente wie Leitflächen, Turbulatoren und/oder Turbulenzerzeuger erfolgt. Ein besonders vorteilhafter Mischungsmechanismus hängt von den Wärmefreisetzungseigenschaften und der Fluiddynamik, insbesondere der Reynolds-Zahl, der Reaktion beziehungsweise des Prozesses ab. Unterschiedliche Mischungsmechanismen können unterschiedliche Netzauflösungen und somit unterschiedliche Rechenzeiten und Rechenleistungen in einer CFD-Berechnung des Reaktors erfordern und können gegebenenfalls transient berechnet werden, was für eine Optimierung ebenfalls zu berücksichtigen ist (CFD - computational fluid dynamics). Der Reaktor wird beispielsweise die zuvor genannte CFD-Berechnung konstruiert und ausgelegt, wodurch die zuvor genannten Parameter besonders einfach eingestellt werden können.

Erfindungsgemäß weist der Reaktor in dem Mediumkanal eine von dem Medium umströmbare, insbesondere massive, Gitterstruktur auf, welche mehrere Stäbe aufweist, die an jeweiligen Knoten der Gitterstruktur mechanisch miteinander verbunden sind. Die Stäbe und/oder die Knoten können massiv sein, sodass die Gitterstruktur insgesamt massiv sein kann. Die Gitterstruktur und somit die Knoten und die Stäbe sind vorzugsweise eigensteif, das heißt formstabil. Unter dem Merkmal, dass der Reaktor die Gitterstruktur aufweist, ist zu verstehen, dass der Monolith die Gitterstruktur bildet, sodass die Gitterstruktur beispielsweise einstückig mit dem übrigen Reaktor ausgebildet und nicht etwa ein separates Bauteil ist. Insbesondere sind die Stäbe und die Knoten einstückig miteinander ausgebildet, sodass der Monolith den gesamten Reaktor beziehungsweise die gesamte Gitterstruktur bildet. Vorzugsweise weist der jeweilige Stab einen geradlinigen Verlauf auf, insbesondere über seine vollständige Erstreckung, das heißt durchgängig von Knoten zu Knoten.

Da die Gitterstruktur in dem Mediumkanal angeordnet ist, ist der Reaktionskanal, insbesondere außenseitig, von der Gitterstruktur umgeben. Die Gitterstruktur in dem Mediumkanal wirkt als spannungstragende Struktur und gleichzeitig als sekundäre Wärmeleitfläche. Hierdurch kann der Reaktionskanal beziehungsweise dessen Kanalwand besonders dünnwandig ausgebildet werden, sodass ein besonders vorteilhafter Wärmeaustausch gewährleistet werden kann. Ferner kann die auch einfach als Gitter bezeichnete Gitterstruktur als passive Mischstruktur im Mediumkanal wirken, sodass eine thermische Grenzschicht zwischen dem Reaktionskanal und dem Mediumkanal beziehungsweise dem Medium an sich kontinuierlich erneuert wird.

In weiterer Ausgestaltung der Erfindung sind der Mediumkanal und der Reaktionskanal in einem auch als Behälter bezeichneten Gehäuse angeordnet. Vorteilhafterweise ist auch der Zuführkanal in dem Gehäuse angeordnet. Vorzugsweise ist es vorgesehen, dass der Mediumkanal einerseits durch eine innenumfangsseitige Mantelfläche des Gehäuses des Reaktors, insbesondere direkt, begrenzt ist. Andererseits ist der Mediumkanal durch eine außenumfangsseitige Mantelfläche eines Kanalelements, insbesondere direkt, begrenzt, wobei der Reaktionskanal durch eine der außenumfangsseitigen Mantelfläche abgewandte, innenumfangsseitige Mantelfläche des Kanalelements, insbesondere direkt, begrenzt ist. Unter dem Merkmal, dass der Mediumkanal durch die innenumfangsseitige Mantelfläche direkt begrenzt ist, ist zu verstehen, dass das den Mediumkanal durchströmende Medium die innenumfangsseitige Mantelfläche des Gehäuses direkt anströmt und somit direkt berühren kann. Unter dem Merkmal, dass der Mediumkanal durch die außenumfangsseitige Mantelfläche des Kanalelements direkt begrenzt ist, ist zu verstehen, dass das den Mediumkanal durchströmende Medium die außenumfangsseitige Mantelfläche direkt anströmt und somit direkt berühren kann. Unter dem Merkmal, dass der Zuführkanal durch die innenumfangsseitige Mantelfläche des Kanalelements direkt begrenzt ist, ist zu verstehen, dass der den Zuführkanal durchströmende zweite Reaktant die innenumfangsseitige Mantelfläche des Kanalelements direkt anströmen und somit direkt berühren kann. Das Kanalelement ist beispielsweise einstückig mit dem Gehäuse und/oder mit dem zuvor genannten, den Zuführkanal bildenden oder begrenzenden Zuführkanalelement ausgebildet.

Das Kanalelement und somit der Reaktionskanal sowie der Mediumkanal sind beispielsweise von einer insbesondere dicken Wand umhüllt, wobei die dicke Wand das Gehäuse bildet. Hierdurch kann eine besonders vorteilhafte Betriebssicherheit des Reaktors gewährleistet werden. Insbesondere können Kräfte von etwaigen Hochdruckbauteilen abgefangen beziehungsweise aufgenommen werden.

Zumindest ein Teilbereich der Gitterstruktur ist beispielsweise aus Gitterzellen gleicher Geometrie und gleicher Größe aufgebaut, wobei die Größe beispielsweise in einem Bereich von 1 mm bis 10 mm liegt. Die Größe wird auch als Gitterzellengröße bezeichnet und liegt vorzugsweise in einem Bereich von einschließlich 1 mm bis einschließlich 10 mm, bevorzugt in einem Bereich von einschließlich 3 mm bis einschließlich 7 mm und besonders bevorzugt in einem Bereich von einschließlich 3,5 mm bis einschließlich 6 mm. Die Größe kann eine Kantenlänge der jeweiligen Gitterzelle sein. Alle Gitterzellen können die gleiche Geometrie und die gleiche Größe aufweisen, oder ein erster Teilbereich der Gitterstruktur ist aus ersten Gitterzellen gleicher Größe und gleicher Geometrie gebildet und ein sich an den ersten Teilbereich anschließender zweiter Teilbereich der Gitterstruktur ist aus zweiten Gitterzellen gleicher Größe und gleicher Geometrie gebildet, wobei die Geometrie der ersten Gitterzellen von der Geometrie der zweiten Gitterzellen und/oder die Größe der ersten Gitterzellen von der Größe der zweiten Gitterzellen unterschiedlich sein kann.

Der jeweilige Stab wird auch als Gitterstab bezeichnet, wobei ein Durchmesser des jeweiligen Stabs beispielsweise in einem Bereich von einschließlich 0,5 mm bis einschließlich 3 mm von, insbesondere in einem Bereich von einschließlich 0,7 mm bis einschließlich 1,5 mm und besonders bevorzugt in einem Bereich von einschließlich 0,8 mm bis einschließlich 1,3 mm liegt. Die jeweilige Gitterzelle wird auch als Gittertyp bezeichnet und kann beispielsweise ein Diamantgitter oder ein anderer Gittertyp sein, welche sich durch ein generatives Fertigungsverfahren, insbesondere durch ein Pulverbettverfahren beziehungsweise durch ein Pulverbettschmelzverfahren und/oder DMLM, herstellen lässt.

Schließlich hat es sich als besonders vorteilhaft gezeigt, wenn der Zuführkanal über die Durchgangsöffnungen fluidisch mit dem Reaktionskanal verbunden und somit an den Stellen der Durchgangsöffnungen von dem zweiten Reaktanten durchströmbar und ansonsten, das heißt mit Ausnahme der Durchgangsöffnungen für die Reaktanten dicht ist. Hierdurch kann eine unerwünschte Vermischung der Reaktanten vermieden werden.

Vorzugsweise weist der vorzugsweise als Monolith ausgebildete Reaktor äußerlich lediglich Anschlüsse für Medien wie beispielsweise die Reaktanten, das Produkt und das Medium sowie gegebenenfalls für Sensoreinschübe wie beispielsweise Thermoelementkanäle, Kanäle für Druckmessungen und/oder Kanäle für Probennahmen auf, wobei der Reaktionsapparat darüber hinaus vorzugsweise ein nicht weiter zerlegbares monolithisches und vorzugsweise metallisches Bauteil ist. Mit anderen Worten ist der Reaktor, insbesondere Monolith, vorzugsweise aus einem metallischen Werkstoff, insbesondere aus Stahl, gebildet. Alle benötigten Anschlüsse werden beispielsweise direkt in einem CAD-Modell implementiert, um Nacharbeit gering halten zu können (CAD - computer aided design - rechnerunterstütztes Konstruieren).

Zu den zuvor genannten Parametern, die den Reaktor, insbesondere dessen Geometrie beziehungsweise Design, kennzeichnen, beschreiben oder charakterisieren, zählen beispielsweise:
- globale Kanalform des Reaktionskanals: Zuspeisungssystem des ersten Reaktanten, beispielsweise Durchmesser, Steigung und Länge der Helix; Einspeisung des zweiten Reaktanten: Anzahl von Verteilungspunkten, Abstand zwischen einzelnen Zuspeisungspunkten beziehungsweise zwischen den Durchgangsöffnungen;
- Kanalquerschnitt; Kanalgröße und Größenverhältnis, welches das Verhältnis aus Höhe und Breite des jeweiligen Kanals, insbesondere des Reaktionskanals bezeichnet. Das Größenverhältnis des Reaktionskanals ist beispielsweise anpassbar in Länge und Breite für eine vorteilhafte Mischung und Wärmeabfuhr;
- Mischungsmechanismus zum Beispiel für Flüssig-Flüssig-Systeme, Amplitude/Frequenz für Sinusform, Radius für Serpentinenform, Winkel und Abstand für Leitelemente beziehungsweise Leitbleche;
- Druckmantel beziehungsweise Gehäuse des Reaktors: Entsprechend der abzufangenden maximalen Drücke wird die Wandstärke mit notwendigem Sicherheitsfaktor individuell angepasst;
- Größe des Reaktors: Entsprechend der Stoffumsetzung und Durchflussmenge wird der Reaktionsapparat in seinen Dimensionen, insbesondere im Hinblick auf Durchmesser, Länge und Anschlüsse, angepasst;
- In der Anpassung wird die chemisch verträgliche Legierung insbesondere im Hinblick auf Korrosion, keine Inhibition/Kontamination et cetera ausgewählt und mit ihren physikalisch-chemischen Parametern entsprechend für die automatisierte Auslegung verwendet;
- Speziell für das Ausführungsbeispiel der Flüssig-Flüssig-Systeme: Gitterform und Gittertypus: entsprechend der notwendigen Druckfestigkeit, Wärmeabfuhr und des Strömungswiderstands im Medium kann die den Reaktionskanal umgebende Gitterstruktur angepasst werden.

Die Mischungseigenschaften des Reaktionskanals und damit auch die Wärmefreisetzung können optimal an die Randbedingungen angepasst werden, durch geometrische Parameteränderungen wird eingestellt, ob sehr plötzlich vermischt werden soll oder ob dies über eine längere Wegstrecke erfolgen soll.

Die parametrisierte Geometrie kann beispielsweise durch ein CFD-Simulationsprogramm und eine Optimierungssoftware verknüpft werden, um die optimalen Parameter für gegebene Randbedingungen iterativ zu berechnen. Dabei gibt die CFD Berechnung eine Leistungsfähigkeit des jeweiligen Designs zurück, während der Optimierer anhand dieser Information neue geometrische Parameter auswählt. Je nach Anwendung und Prioritäten können unterschiedliche Zielfunktionen und Restriktionen für das Optimierungsproblem definiert werden. Beispielsweise kann in einem Ausführungsbeispiel die Reaktorgröße als Zielfunktion minimiert werden, wobei der Produktumsatz mindestens 98 Prozent betragen muss (Restriktion 1) und die maximale Fluidtemperatur unter 300°C bleiben soll (Restriktion 2). Unter der maximalen Fluidtemperatur ist vorzugsweise die maximale Temperatur des ersten Reaktanten und/oder des zweiten Reaktanten und/oder des Produkts und/oder der Reaktionskanals zu verstehen. Sind komplexe reaktionskinetische Parameter über Nebenreaktionen vorhanden, so kann auch beispielsweise die Selektivität der Reaktion als Zielfunktion ausgewählt werden, um Nebenreaktionen zu minimieren beziehungsweise gering zu halten. Für die CFD-Berechnung kommt ein CFD-Programm zum Einsatz, welches beispielsweise multiphysikalische Zusammenhänge (multi physics-Zusammenhänge) berücksichtigt, so dass die gesamte Kombination aus Reaktion, Strömung und Wärmeübergang optimiert wird. Ergebnis ist ein optimaler Reaktionsapparat, der auf die Prozess- und Reaktionseigenschaften sehr gut angepasst ist, und automatisch aus einem parametrisierten Grundmodell gebildet wird. Andere Substanzen, Reaktionskinetiken, Massenströme, Temperaturen, Wärmeleitfähigkeiten, Wärmekapazitäten, et cetera führen zu einer anderen vorteilhaften Geometrie.

Ein zweiter Aspekt der Erfindung betrifft ein Verfahren zum Herstellen eines Reaktors, insbesondere eines erfindungsgemäßen Reaktors, zum Leiten von wenigstens zwei Reaktanten. Bei einem ersten Schritt des Verfahrens wird wenigstens ein sich länglich erstreckender Reaktionskanal hergestellt, welcher entlang seiner länglichen Erstreckung von einem ersten der Reaktanten durchströmbar ist. Bei einem zweiten Schritt des Verfahrens wird wenigstens ein von dem zweiten Reaktanten durchströmbarer Zuführkanal hergestellt, welcher über mehrere, voneinander beabstandete und von jeweiligen Teilströmen des zweiten Reaktanten durchströmbare Durchgangsöffnungen fluidisch mit dem Reaktionskanal verbunden ist beziehungsweise verbunden wird. Dabei sind die jeweiligen Teilströme des zweiten Reaktanten über die Durchgangsöffnungen dem Reaktionskanal und dadurch dem ersten Reaktanten zuführbar, um dadurch in dem Reaktionskanal eine chemische Reaktion der Reaktanten, insbesondere zumindest einen auch als Reaktionsprodukt bezeichneten Produkt, ablaufen beziehungsweise stattfinden zu lassen. Bei einem dritten Schritt des Verfahrens wird wenigstens ein den Reaktionskanal umgebender Mediumkanal hergestellt, welcher von wenigstens einem Medium, insbesondere von wenigstens einem Fluid, durchströmbar ist. In dem Mediumkanal (26) wird eine von dem Medium (28) umströmbare Gitterstruktur (68) erstellt, welche mehrere Stäbe (70) aufweist, die an jeweiligen Knoten (72) der Gitterstruktur (68) mechanisch miteinander verbunden sind. Durch das Medium ist infolge eines Wärmeaustausches zwischen dem Medium und dem Reaktionskanal zumindest eine Temperatur des Reaktionskanals und somit beispielsweise eine Temperatur zumindest eines der zuvor genannten Stoffe beinflussbar. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- FIG 1: eine schematische und geschnittene Perspektivan-sicht eines erfindungsgemäßen Reaktors gemäß einer ersten Ausführungsform;
- FIG 2: eine schematische Perspektivansicht des Reaktors;
- FIG 3: eine schematische Schnittansicht des Reaktors;
- FIG 4: eine schematische Schnittansicht des Reaktors gemäß einer zweiten Ausführungsform;

- FIG 5: eine schematische und vergrößerte Schnittansicht eines in FIG 4 mit B bezeichneten Bereiches des Reaktors gemäß FIG 4;
- FIG 6: eine schematische Seitenansicht einer ersten Ausführungsform eines Reaktionskanals des Reaktors;
- FIG 7: eine schematische Seitenansicht einer zweiten Ausführungsform des Reaktionskanals;
- FIG 8: eine schematische Seitenansicht einer dritten Ausführungsform des Reaktionskanals
- FIG 9: eine schematische Seitenansicht einer vierten Ausführungsform des Reaktionskanals;
- FIG 10: eine schematische Seitenansicht einer fünften Ausführungsform des Reaktionskanals; und
- FIG 11: eine sechste Ausführungsform des Reaktionskanals.

In den FIG sind gleiche oder funktionsgleiche Elemente mit gleichen Bezugszeichen versehen.

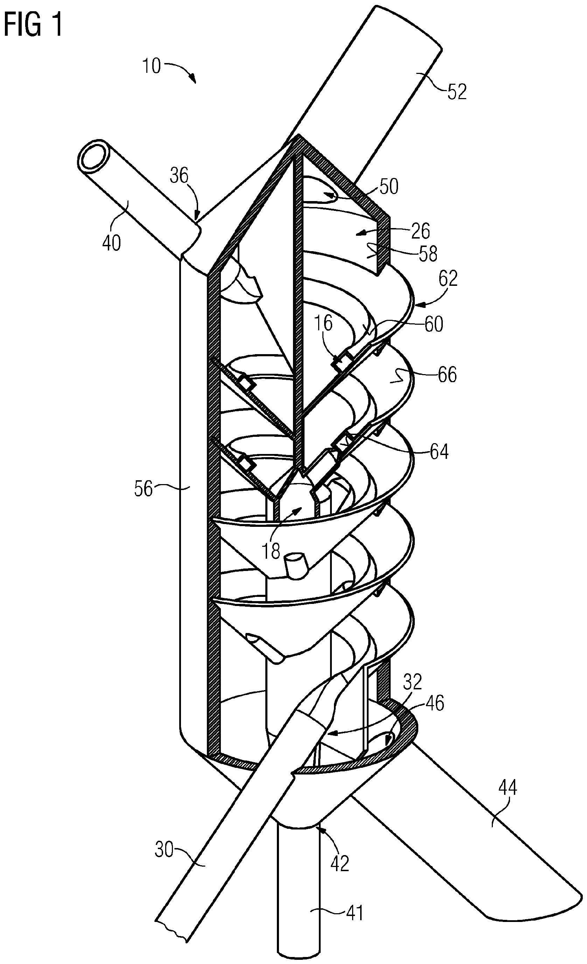

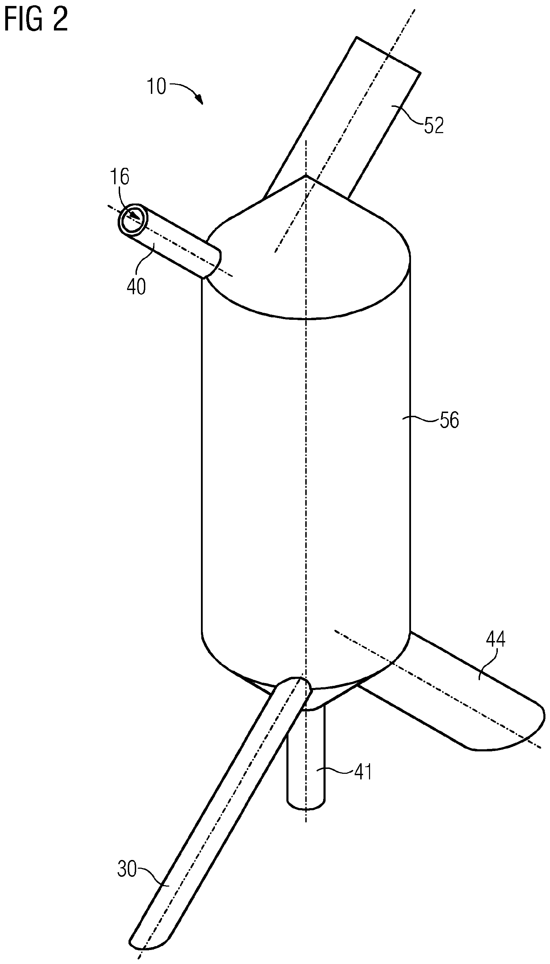

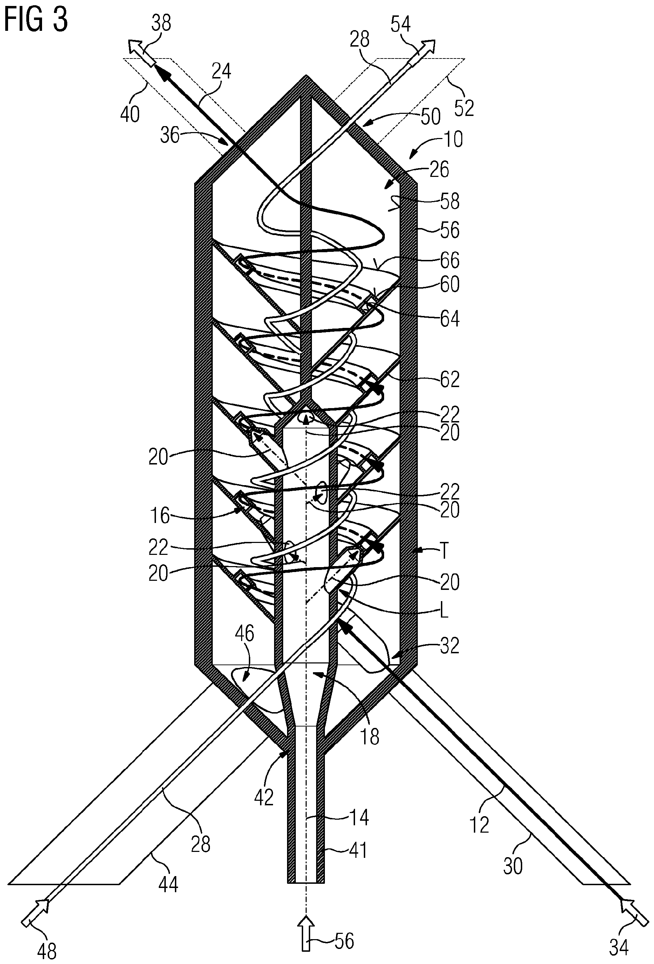

FIG 1 zeigt in einer schematischen und geschnittenen Perspektivansicht eine Reaktor 10 zum Leiten von wenigstens zwei in FIG 3 schematisch dargestellten Reaktanten 12 und 14. Besonders gut in Zusammenschau mit FIG 2 und 3 ist erkennbar, dass der Reaktor 10, welcher auch als Reaktionsapparat bezeichnet wird, wenigstens oder genau einen sich länglich erstreckenden Reaktionskanal 16 aufweist, welcher entlang seiner länglichen Erstreckung von dem ersten Reaktanten 12 durchströmbar ist beziehungsweise durchströmt wird. FIG 1 bis 3 zeigen eine erste Ausführungsform des Reaktors 10, wobei der Reaktionskanal 16 helixförmig ausgebildet ist. Dies bedeutet, dass sich der Reaktionskanal 16 helixförmig erstreckt und somit eine Helix bildet beziehungsweise eine Helixform aufweist. Somit ist die längliche Erstreckung des Reaktionskanals 16 helixförmig beziehungsweise die längliche Erstreckung des Reaktionskanals 16 folgt einer Helix beziehungsweise einer Schraubenlinie, die sich beispielsweise mit einer insbesondere konstanten Steigung um einen gedachten Zylindermantel eines Kreiszylinders herum windet.

Der Reaktor 10 weist darüber hinaus wenigstens oder genau einen von dem zweiten Reaktanten 14 durchströmbaren Zuführkanal 18 auf, welcher über mehrere, voneinander beabstandete und von jeweiligen Teilströmen 20 des zweiten Reaktanten 14 durchströmbare Durchgangsöffnungen 22 fluidisch mit dem Reaktionskanal 16 verbunden ist. Im Rahmen eines Verfahrens reagieren die Reaktanten 12 und 14 chemisch, das heißt im Rahmen einer vorzugsweise exothermen Reaktion, zu einem auch als Reaktionsprodukt bezeichneten Produkt 24, wobei die Reaktanten 12 und 14 und das Produkt 24 auch als Komponenten oder Stoffe bezeichnet werden. Die jeweiligen Teilströme 20 des zweiten Reaktanten 14 sind über die Durchgangsöffnungen 22 dem Reaktionskanal 16 und somit dem ersten Reaktanten 14 zugeführt. Mit anderen Worten werden im Rahmen des Verfahrens die jeweiligen Teilströme 20 über die Durchgangsöffnungen 22 in den Reaktionskanal 16 eingeleitet und dadurch dem Reaktanten 14 zugeführt, sodass die Teilströme 20 und somit der Reaktant 14 in den Reaktanten 12 eingespeist werden. Dadurch werden die Reaktanten 12 und 14 in dem Reaktionskanal 16 miteinander vermischt, sodass beispielsweise die Reaktanten 12 und 14 in dem Reaktionskanal 16 zu einem Produkt 24 chemisch reagieren. Somit läuft bei dem Verfahren in dem Reaktionskanal 16 die zuvor genannte chemische Reaktion der Reaktanten 12 und 14 zum Produkt 24 ab.

Der Reaktor 10 weist darüber hinaus wenigstens oder genau einen den Reaktionskanal 16 umgebenden Mediumkanal 26 auf, welcher von wenigstens einem insbesondere als Fluid, insbesondere als Flüssigkeit, ausgebildeten Medium durchströmbar ist beziehungsweise durchströmt wird. Durch das Medium 28 ist beziehungsweise wird in Folge eines Wärmeaustausches zwischen dem Reaktionskanal 16 und dem Medium 28 zumindest eine Temperatur des Reaktionskanals 16 beeinflussbar beziehungsweise beeinflusst. Hierdurch wird zumindest eine Temperatur zumindest eines der in dem Reaktionskanal 16 aufgenommenen beziehungsweise den Reaktionskanal 16 durchströmenden Stoffe eingestellt. Bei den in den FIG veranschaulichten Ausführungsbeispielen wird das Medium als ein Kühlmedium, insbesondere als ein Kühlfluid, genutzt, um durch das Kühlmedium den Reaktionskanal 16 und somit zumindest einen der Stoffe, insbesondere das Produkt 24, zu kühlen. Hierzu erfolgt ein Wärmeübergang von dem zumindest einen Stoff beziehungsweise von dem Reaktionskanal 16 an das Medium. Hierdurch wird der zumindest eine Stoff auf seinem Weg durch den Reaktionskanal 16 gekühlt, und das Medium 28 wird auf seinem Weg durch den Mediumkanal 26 erwärmt.

Aus FIG 3 ist besonders gut erkennbar, dass der Reaktant 12, insbesondere über einen Anschluss 30 des Reaktors 10, an einem ersten Ende 32 des Reaktionskanals 16 in den Reaktionskanal 16 eingeleitet wird. Dies ist durch einen Pfeil 34 veranschaulicht. In dem Reaktionskanal 16 reagiert zumindest nahezu der gesamte Reaktant 12 mit zumindest nahezu dem gesamten Reaktanten 14 zu dem Produkt 24, sodass beispielsweise bezogen auf die Komponenten lediglich oder ausschließlich das Produkt 24 an einem zweiten Ende 36 des Reaktionskanals 16 aus dem Reaktionskanal 16 ausgeleitet beziehungsweise abgeführt wird. Dies ist durch einen Pfeil 38 veranschaulicht. Das Produkt 24 wird insbesondere über einen Anschluss 40 des Reaktors 10 aus dem Reaktionskanal 16 abgeführt.

Der Reaktant 14 wird, insbesondere über einen Anschluss 41 des Reaktors 10, an einem ersten Ende 42 des Zuführkanals 18 in diesen eingeleitet. Der Reaktant 14 kann von dem Ende 42 zu den jeweiligen Durchgangsöffnungen 22 strömen und die Durchgangsöffnungen 22 in Form der Teilströme 20 durchströmen.

Außerdem wird das Medium 28, insbesondere über einen Anschluss 44 des Reaktors 10, an einem ersten Ende 46 des Mediumkanals 26 in diesen eingeleitet, was in FIG 3 durch einen Pfeil 48 veranschaulicht ist. Das Medium 28 strömt von dem Ende 46 zu einem gegenüberliegenden zweiten Ende 50 des Mediumkanals 26. Auf seinem Weg von dem Ende 46 zu dem Ende 50 wird das Medium 28 in Folge eines Wärmeübergangs von dem Reaktionskanal 16 an das Medium 28 erwärmt. Insbesondere über einen Anschluss 52 des Reaktors 10 wir das Medium 28 an dem Ende 50 aus dem Mediumkanal 26 abgeführt, was in FIG 3 durch einen Pfeil 54 veranschaulicht ist. Aus FIG 1 und 3 ist erkennbar, dass der Zuführkanal 18, der Reaktionskanal 16 und der Mediumkanal 26 in einem auch als Behälter bezeichneten Gehäuse 56 aufgenommen und somit von dem Gehäuse 56 umhüllt sind. Das Einleiten des Reaktanten 14 wird in FIG 3 durch einen Pfeil 57 veranschaulicht. Der Pfeil 57 veranschaulicht auch eine Strömungsrichtung, in die der Zuführkanal 18 von dem Reaktanten 14 durchströmbar ist beziehungsweise durchströmt wird. Dabei sind die Durchgangsöffnungen 22 entlang der durch den Pfeil 57 veranschaulichten Strömungsrichtung voneinander beabstandet.

Des Weiteren ist es vorgesehen, dass der gesamte Reaktor 10 einstückig ausgebildet und somit durch einen Monolithen gebildet ist. Somit sind alle Wände und Wandungsbereiche, die den Reaktionskanal 16, den Zuführkanal 18, den Mediumkanal 26 und die Anschlüsse 30, 40, 41, 44 und 52 und die Durchgangsöffnungen 22 begrenzen, einstückig miteinander ausgebildet, das heißt durch den Monolithen gebildet. Dabei ist der Reaktor 10 vorzugsweise durch ein generatives Fertigungsverfahren hergestellt. Außerdem erstreckt sich zumindest ein Teilbereich T des Reaktionskanals 16 helixförmig um zumindest einen Längenbereich L des Zuführkanals 18, wodurch ein besonders vorteilhafter Wärmeaustausch zwischen dem Medium 28 und dem Reaktionskanal 16 realisiert werden kann. Außerdem verläuft der Längenbereich L des Zuführkanals 18 geradlinig, das heißt entlang einer Geraden.

Besonders gut aus FIG 1 und 3 ist erkennbar, dass der Mediumkanal 26 einerseits durch eine innenumfangsseitige Mantelfläche 58 des Gehäuses 56 und andererseits durch eine außenumfangsseitige Mantelfläche 60 eines Kanalelements 62 jeweils direkt begrenzt ist, sodass das Medium 28 die Mantelflächen 58 und 60 direkt anströmt und somit direkt berührt. Dabei ist der Reaktionskanal 16 durch eine der außenumfangsseitigen Mantelfläche 60 des Kanalelements 62 abgewandte, innenumfangsseitige Mantelfläche 64 des Kanalelements 62 direkt begrenzt, sodass der Reaktant 12 beziehungsweise das Produkt 24 die Mantelfläche 64 direkt anströmen und somit direkt berühren kann beziehungsweise anströmt beziehungsweise berührt. Der Reaktionskanal 16 ist dabei beispielsweise auf einer auch als Wendelfläche bezeichnete Helikoide projiziert, welche durch das Kanalelement 62 gebildet sein kann und mit 66 bezeichnet ist.

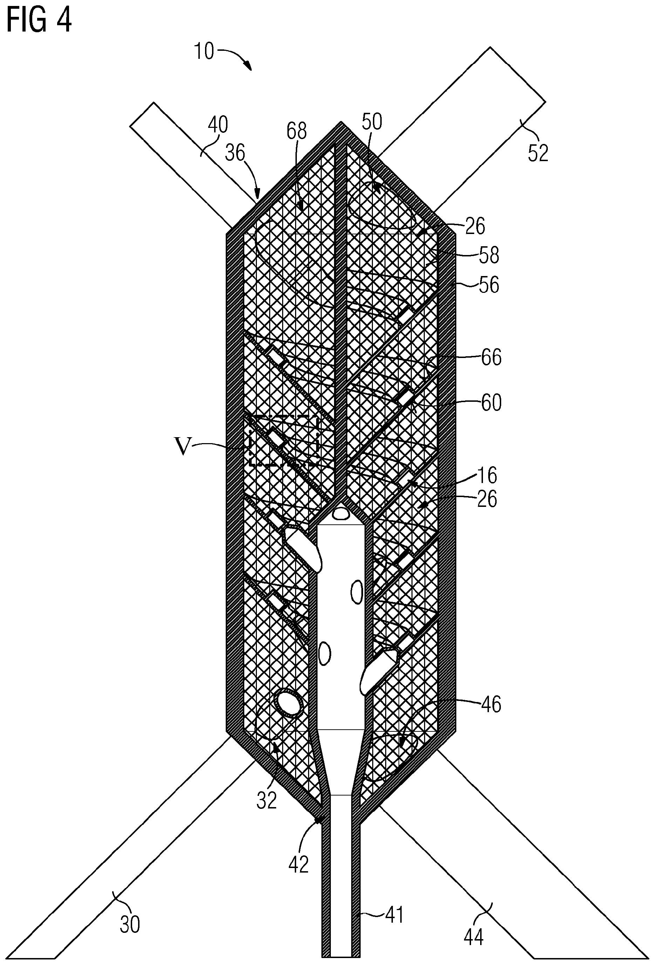

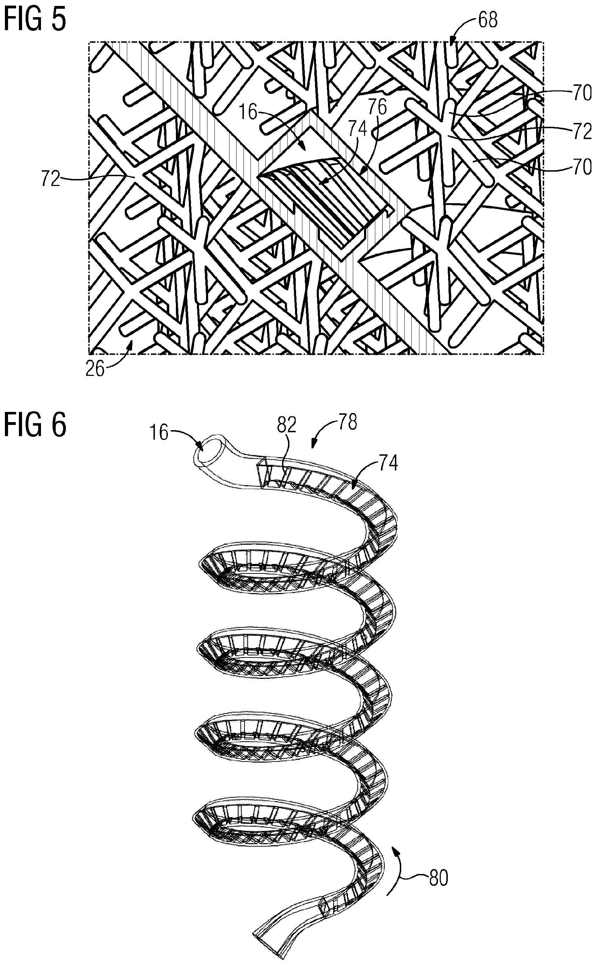

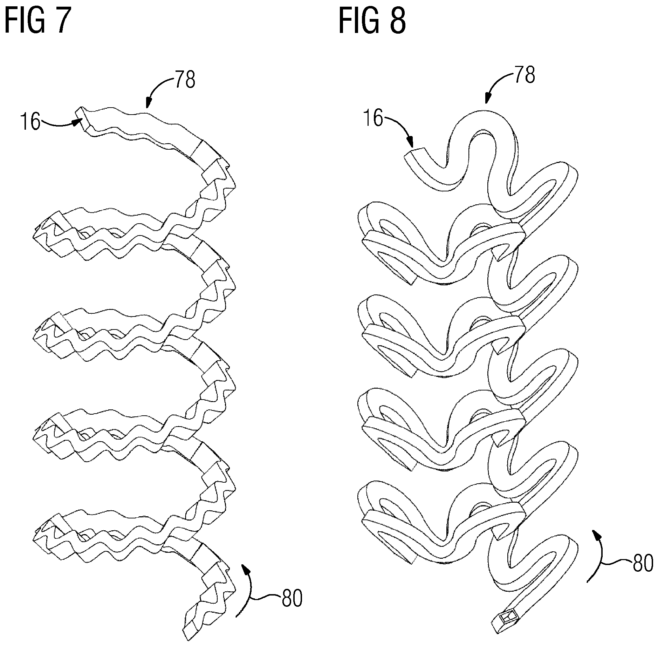

FIG 4 und 5 veranschaulichen eine zweite Ausführungsform des Reaktors 10. Bei der zweiten Ausführungsform weist der Reaktor in dem Mediumkanal 26 eine von dem Medium 28 direkt umströmbare Gitterstruktur 68 auf, welche besonders gut aus FIG 7 erkennbar ist. Die Gitterstruktur 68 weist mehrere Stäbe 70 auf, die an jeweiligen Knoten 72 der Gitterstruktur 68 zumindest mechanisch miteinander verbunden sind. Die Gitterstruktur 68 oder eine Gitterstruktur kann auch bei der ersten Ausführungsform zum Einsatz kommen und in FIG 1 bis 3 nicht dargestellt sein. Das Gehäuse 56 begrenzt einen Innenraum, in welchem der Mediumkanal 26, der Reaktionskanal 16 und der Zuführkanal 18 verlaufen beziehungsweise aufgenommen sind. Vorzugsweise ist dieser Innenraum bis auf den Reaktionskanal 16 vollständig mit der wenigstens einen Gitterstruktur 68 aufgefüllt, wobei die Gitterstruktur 68 beispielsweise an der innenumfangsseitigen Mantelfläche 58 vollständig anliegt. Ferner liegt die Gitterstruktur 68 beispielsweise an dem Kanalelement 62 und dabei insbesondere an der Helikoide 66 beziehungsweise an durch die Helikoide 66 gebildeten Trennwänden oder Trennebenen an, durch welche beispielsweise der Innenraum, insbesondere der Mediumkanal 26 in jeweilige Teilräume oder Teilbereiche getrennt ist. Hierdurch kann eine sehr hohe Druckfestigkeit des Reaktors 10 sowie ein guter Wärmeübergang beziehungsweise Wärmeaustausch realisiert werden. Wie aus FIG 7 besonders gut erkennbar ist, erstreckt sich der jeweilige Stab 70 gradlinig beziehungsweise weist einen geraden Verlauf auf.

Außerdem ist besonders gut aus FIG 7 erkennbar, dass der Reaktor 10 in dem Reaktionskanal 16 wenigstens eine Mischeinrichtung 74 zum vorzugsweise ausschließlichen passiven Vermischen des ersten Reaktanten 12 mit dem zweiten Reaktanten 14 aufweist. Ferner ist es bei der ersten Ausführungsform und/oder bei der zweiten Ausführungsform denkbar, dass der Reaktionskanal 16 wenigstens einen Teilbereich eines sich entlang der länglichen Erstreckung des Reaktionskanals 16 beziehungsweise entlang der Strömungsrichtung verändernden und somit alternierenden und von dem ersten Reaktanten 12 durchströmbaren und auch als Strömungsquerschnitt bezeichneten Querschnitt 76 aufweist. Insbesondere kann sich zumindest der Teilbereich des Reaktionskanals 16 entlang der Strömungsrichtung beziehungsweise entlang der Erstreckung des Reaktionskanals 16 verjüngen und somit als eine Düse ausgebildet sein.

FIG 6 zeigt eine erste Ausführungsform des Reaktionskanals 16, wobei der Reaktionskanal gemäß FIG 6 ohne weiteres in den Reaktoren 10 gemäß FIG 1 bis 7 zum Einsatz kommen kann. Bei der in FIG 6 gezeigten ersten Ausführungsform verläuft der Reaktionskanal 16 streng helixförmig, sodass seine Windungen 68 nicht an sich beziehungsweise in sich wellenförmig ausgebildet sind.

Demgegenüber zeigt FIG 7 eine zweite Ausführungsform des Reaktionskanals 16, wobei die zweite Ausführungsform ohne weiteres bei den Reaktoren 10 gemäß FIG 1 bis 5 zum Einsatz kommen kann. Bei der in FIG 7 gezeigten zweiten Ausführungsform verlaufen die Windungen 78 des helixförmigen und dadurch in eine in FIG 7 durch einen Pfeil 80 veranschaulichte Windungsrichtung aufweisenden Reaktionskanal 16 entlang der Windungsrichtung wellenförmig.

Ferner zeigt FIG 8 eine dritte Ausführungsform des Reaktionskanals 16, wobei die dritte Ausführungsform ohne weiteres bei den Reaktoren 10 gemäß FIG 1 bis 5 zum Einsatz kommen kann. Bei der dritten Ausführungsform verlaufen die Windungen 78 schräg und/oder senkrecht zur Windungsrichtung (Pfeil 80) wellenförmig.

Wie bereits zuvor angedeutet dient die Gitterstruktur 68 der Erhöhung der Druckstabilität, sodass besonders geringe Wanddicken beziehungsweise Wandstärken des Reaktors 10 realisiert werden können. Außerdem kann ein besonders vorteilhafter Wärmeaustausch gewährleistet werden. Positive Nebeneffekte sind eine Mischung im Medium 28 und die Schaffung von sekundären Flächen zum Wärmeübergang auf das vorliegend als Kühlmittel fungierende Medium 28.

Außerdem weist der Reaktor 10 ein komplett parametrisiertes Design zur Anpassung des Reaktors 10 an verschiedene Prozess- und Reaktionsparameter auf. Dies führt zu einer reduzierten Entwicklungszeit für neue Reaktoren und Anpassung an unterschiedliche Anwendungen sowie zu einer vorteilhaften Reproduzierbarkeit in der Auslegung des Reaktors 10.

Außerdem ist der Reaktor 10 durch ein generatives Fertigungsverfahren und somit durch additive Fertigung geschaffen. Hierdurch kann auch eine besonders komplexe Geometrie des Reaktors 10 auf einfache Weise realisiert werden, wobei die geometrische Komplexität unabhängig von der Materialauswahl ist. Etwaige Fertigungslimitierungen des generativen Fertigungsverfahrens werden direkt in der Parametrisierung berücksichtigt. Außerdem ist eine monolithische Bauweise auf einfache Weise möglich.

Der Reaktionskanal 16 ist ein Kanal, in welchem die chemische Reaktion der der Reaktanten 12 und 14 stattfindet. Der Reaktionskanal wird länger gestreckt im Sinne eines Rohrreaktors mit mehrfacher Zuspeisung des Reaktanten 14 in kleinen Massenströmen statt in einem großen. Ferner ist ein Größenverhältnis des Reaktionskanals 16 anpassbar insbesondere im Hinblick auf Länge und Breite, um eine vorteilhafte Wärmeabfuhr gewährleisten zu können. Außerdem ist die Form des Reaktionskanals 16 auf einfache Weise anpassbar, beispielsweise durch mischende und insbesondere düsenartige Elemente und/oder durch Einbringung von fluidleitenden Leitblechen, Turbulenzerzeugern und/oder anderen Mischelementen. Dadurch können der Grat der Mischung und damit auch die Wärmefreisetzung eingestellt werden, sodass eingestellt werden kann, ob sehr plötzlich vermischt werden soll oder über eine längere Wegstrecke. Trotz einer etwaig komplexen Stromführung kann ein kompaktes Design aufgrund der zentralen Einspeisung des Reaktanten 14 und aufgrund der Helixform des Reaktionskanals 16 realisiert werden.

Wie aus FIG 3 erkennbar ist, kann bei der ersten Ausführungsform und/oder bei der zweiten Ausführungsform eine Gleichströmung des Mediums 28 und einer aus dem Vermischen des Reaktanten 12 mit dem Reaktanten 14 resultierenden Reaktionsmischung vorgesehen sein, welche durch den Reaktionskanal 16 strömt. Alternativ ist eine Gegenströmung des Mediums 28 und der Reaktionsmischung ohne weiteres möglich. Bis auf den Reaktionskanal 16 ist der genannte Innenraum vollständig mit der Gitterstruktur 68 gefüllt, welche beispielsweise in FIG 3 nicht gezeigt ist. Die Gitterstruktur 68 liegt an den genannten Wänden und Trennebenen vollständig an. Dadurch werden eine sehr hohe Druckfestigkeit und ein guter Wärmeübergang realisiert.

Aus FIG 6 ist die Mischeinrichtung 74 erkennbar, welche beispielsweise mehrere, entlang der Strömungsrichtung voneinander beabstandete und als Leitbleche ausgebildete Leitelemente 82 zum Vermischen der Reaktanten 12 und 14 aufweist.

Durch die in FIG 7 gezeigte wellenförmige Ausgestaltung der Windungen 78 können diese als Sinus-Schleifen ausgebildet beziehungsweise sinusförmig ausgebildet sein. Bei der in FIG 8 gezeigten dritten Ausführungsform sind die Windungen 78 beispielsweise als Serpentinen beziehungsweise serpentinenartig ausgebildet. Die in FIG 6 bis 8 gezeigten, unterschiedlichen Ausführungsformen besitzen unterschiedliche Reaktandenzuspeisungen und unterschiedliche Mischungs- und Kühleigenschaften.

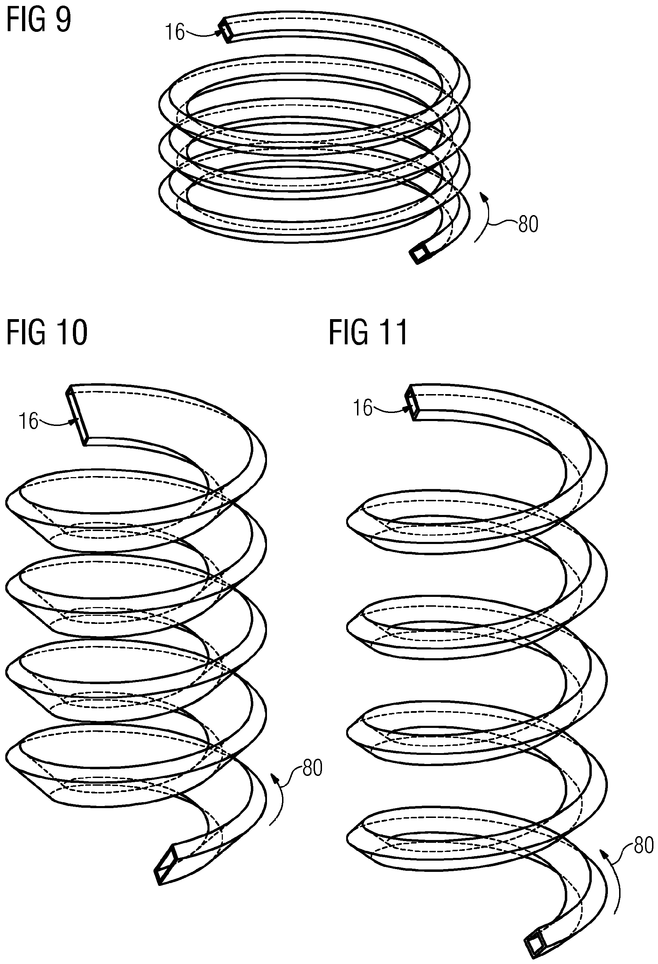

Durch das parametrisierte Design können auf einfache Weise unterschiedliche Geometrien des Reaktors 10, insbesondere des Reaktionskanals 16, realisiert werden, was in FIG 9 bis 11 am Beispiel des Reaktionskanals 16 erkennbar ist. Mit anderen Worten, durch einfaches Ändern von Parametern, die den Reaktor 10 beziehungsweise dessen Geometrie definieren, kann die Geometrie des Reaktors 10 auf einfache Weise variiert werden. Auf diese Weise kann beispielsweise der Reaktionskanal 16 auf einfache Weise variiert werden, insbesondere im Hinblick auf seine Länge und/oder Form und/oder im Hinblick auf einen von dem jeweiligen Stoff durchströmbaren Querschnitt des Reaktionskanals 16 und/oder im Hinblick auf die Anzahl an Turbulenzerzeugern beziehungsweise Mischelementen im Reaktionskanal 16. Die in FIG 6 bis 11 gezeigten Reaktionskanäle 16 können ohne weiteres für die Reaktoren 10 gemäß FIG 1 bis 5 verwendet werden und umgekehrt.

### Bezugszeichenliste

- 10: Reaktor
- 12: erster Reaktant
- 14: zweiter Reaktant
- 16: Reaktionskanal
- 18: Zuführkanal
- 20: Teilstrom
- 22: Durchgangsöffnung
- 24: Produkt
- 26: Mediumkanal
- 28: Medium
- 30: Anschluss
- 32: erstes Ende
- 34: Pfeil
- 36: zweites Ende
- 38: Pfeil
- 40: Anschluss
- 41: Anschluss
- 42: Ende
- 44: Anschluss
- 46: erstes Ende
- 48: Pfeil
- 50: zweites Ende
- 52: Anschluss
- 54: Pfeil
- 56: Gehäuse
- 57: Pfeil
- 58: innenumfangsseitige Mantelfläche
- 60: außenumfangsseitige Mantelfläche
- 62: Kanalelement
- 64: innenumfangsseitige Mantelfläche
- 66: Helikoide
- 68: Gitterstruktur
- 70: Stab
- 72: Knoten
- 74: Mischeinrichtung
- 76: Querschnitt
- 78: Windungen
- 80: Pfeil
- 82: Leitelement
- L: Längenbereich
- T: Teilbereich

## Patentansprüche

1. Reaktor (10) zum Leiten von wenigstens zwei Reaktanten (12, 14), mit wenigstens einem sich länglich erstreckenden Reaktionskanal (16), welcher entlang seiner länglichen Erstreckung von einem ersten der Reaktanten (12, 14) durchströmbar ist, mit wenigstens einem von dem zweiten Reaktanten (14) durchströmbaren Zuführkanal (18), welcher über mehrere, voneinander beabstandete und von jeweiligen Teilströmen (20) des zweiten Reaktanten (14) durchströmbare Durchgangsöffnungen (22) fluidisch mit dem Reaktionskanal (16) verbunden ist, wobei die jeweiligen Teilströme (20) des zweiten Reaktanten (14) über die Durchgangsöffnungen (22) dem Reaktionskanal (16) und dadurch dem ersten Reaktanten (12) zuführbar sind, um dadurch in dem Reaktionskanal (16) eine chemische Reaktion der Reaktanten (12, 14) ablaufen zu lassen, und mit wenigstens einem den Reaktionskanal (16) umgebenden Mediumkanal (26), welcher von wenigstens einem Medium (28) durchströmbar ist, durch welches infolge eines Wärmeaustausches mit dem Reaktionskanal (16) zumindest eine Temperatur des Reaktionskanals (16) beinflussbar ist,
**dadurch gekennzeichnet, dass** der Reaktor (10) in dem Mediumkanal (26) eine von dem Medium (28) umströmbare Gitterstruktur (68) aufweist, welche mehrere Stäbe (70) aufweist, die an jeweiligen Knoten (72) der Gitterstruktur (68) mechanisch miteinander verbunden sind.

2. Reaktor (10) nach Anspruch 1,
wobei der Zuführkanal (18) in eine Strömungsrichtung (56) von dem zweiten Reaktanten (14) durchströmbar ist, und wobei die Durchgangsöffnungen (22) entlang der Strömungsrichtung (56) voneinander beabstandet sind.

3. Reaktor (10) nach Anspruch 1 oder 2,
wobei der Reaktor (10) einstückig ausgebildet ist.

4. Reaktor (10) nach einem der vorhergehenden Ansprüche, wobei der Reaktor (10) durch ein generatives Fertigungsverfahren hergestellt ist.

5. Reaktor (10) nach einem der vorhergehenden Ansprüche, wobei sich der Reaktionskanal (16) helixförmig erstreckt.

6. Reaktor (10) nach Anspruch 5,
wobei sich der Reaktionskanal (16) helixförmig um zumindest einen Längenbereich (L) des Zuführkanals (18) erstreckt.

7. Reaktor (10) nach Anspruch 6,
wobei zumindest der Längenbereich (L) des Zuführkanals (18) geradlinig verläuft.

8. Reaktor (10) nach einem der Ansprüche 5 bis 7,
wobei jeweilige Windungen (78) des helixförmigen und dadurch eine Windungsrichtung (80) aufweisenden Reaktionskanals (16) entlang der Windungsrichtung (80) und/oder schräg zur Windungsrichtung (80) und/oder senkrecht zur Windungsrichtung (80) wellenförmig verlaufen.

9. Reaktor (10) nach einem der vorhergehenden Ansprüche, wobei der Reaktor (10) in dem Reaktionskanal (16) wenigstens eine Mischeinrichtung (74) zum, insbesondere passiven, Vermischen des ersten Reaktanten (12) mit dem zweiten Reaktanten (14) aufweist.

10. Reaktor (10) nach Anspruch 9,
wobei die Mischeinrichtung (74) wenigstens ein Leitelement (82) und/oder wenigstens einen Turbulenzerzeuger aufweist.

11. Reaktor (10) nach einem der vorhergehenden Ansprüche, wobei der Reaktionskanal (16) in wenigstens einem Teilbereich einen sich entlang der länglichen Erstreckung des Reaktionskanals (16) verändernden und zumindest von dem ersten Reaktanten (12) durchströmbaren Querschnitt (76) aufweist.

12. Reaktor (10) nach einem der vorhergehenden Ansprüche, wobei der Mediumkanal (26) einerseits durch eine innenumfangsseitige Mantelfläche (58) eines Gehäuses (56) des Reaktors (10) und andererseits durch eine außenumfangsseitige Mantelfläche (60) eines Kanalelements (62) begrenzt ist, wobei der Reaktionskanal (16) durch eine der außenumfangsseitigen Mantelfläche (60) abgewandte, innenumfangsseitige Mantelfläche (64) des Kanalelements (62) begrenzt ist.

13. Verfahren zum Herstellen eines Reaktors (10) zum Leiten von wenigstens zwei Reaktanten (12, 14), mit den Schritten:
- Herstellen wenigstens eines sich länglich erstreckenden Reaktionskanals (16), welcher entlang seiner länglichen Erstreckung von einem ersten der Reaktanten (12, 14) durchströmbar ist;
- Herstellen wenigstens eines von dem zweiten Reaktanten (14) durchströmbaren Zuführkanals (18), welcher über mehrere, voneinander beabstandete und von jeweiligen Teilströmen (20) des zweiten Reaktanten (14) durchströmbare Durchgangsöffnungen (22) fluidisch mit dem Reaktionskanal (16) verbunden ist, wobei die jeweiligen Teilströme (20) des zweiten Reaktanten über die Durchgangsöffnungen (22) dem Reaktionskanal (16) und dadurch dem ersten Reaktanten (12, 14) zuführbar sind, um dadurch in dem Reaktionskanal (16) eine chemische Reaktion der Reaktanten (12, 16) ablaufen zu lassen; und
- Herstellen wenigstens eines den Reaktionskanal (16) umgebenden Mediumkanals (26), welcher von wenigstens einem Medium (28) durchströmbar ist, durch welches infolge eines Wärmeaustausches mit dem Reaktionskanal (16) zumindest eine Temperatur des Reaktionskanals (16) beinflussbar ist
- **dadurch gekennzeichnet, dass** in dem Mediumkanal (26) eine von dem Medium (28) umströmbare Gitterstruktur (68) erstellt wird, welche mehrere Stäbe (70) aufweist, die an jeweiligen Knoten (72) der Gitterstruktur (68) mechanisch miteinander verbunden sind.

## Claims

1. Reactor (10) for conducting at least two reactants (12, 14), having at least one longitudinally extending reaction channel (16) which can be flowed through along its longitudinal extent by a first of the reactants (12, 14), having at least one feed channel (18) which can be flowed through by the second reactant (14) and which is fluidically connected to the reaction channel (16) via multiple passage openings (22) which are spaced apart from one another and which can be flowed through by respective partial streams (20) of the second reactant (14), wherein the respective partial streams (20) of the second reactant (14) can be fed via the passage openings (22) to the reaction channel (16) and thus to the first reactant (12) in order to thus allow a chemical reaction of the reactants (12, 14) to occur in the reaction channel (16), and having at least one medium channel (26) which surrounds the reaction channel (16) and which can be flowed through by at least one medium (28) by means of which, owing to an exchange of heat with the reaction channel (16), at least a temperature of the reaction channel (16) can be influenced,
**characterized in that** the reactor (10) has, in the medium channel (26), a lattice structure (68) which can be flowed around by the medium (28) and which has multiple rods (70) which are mechanically connected to one another at respective nodes (72) of the lattice structure (68).

2. Reactor (10) according to Claim 1,
wherein the feed channel (18) can be flowed through by the second reactant (14) in a flow direction (56), and wherein the passage openings (22) are spaced apart from one another along the flow direction (56).

3. Reactor (10) according to Claim 1 or 2,
wherein the reactor (10) is formed as a single piece.

4. Reactor (10) according to any of the preceding claims, wherein the reactor (10) is produced by means of a generative manufacturing process.

5. Reactor (10) according to any of the preceding claims, wherein the reaction channel (16) extends in helical form.

6. Reactor (10) according to Claim 5,
wherein the reaction channel (16) extends in helical form around at least one length region (L) of the feed channel (18) .

7. Reactor (10) according to Claim 6,
wherein at least the length region (L) of the feed channel (18) runs rectilinearly.

8. Reactor (10) according to any of Claims 5 to 7,
wherein respective windings (78) of the helical reaction channel (16), which thus has a winding direction (80), run in undulating fashion along the winding direction (80) and/or obliquely with respect to the winding direction (80) and/or perpendicular to the winding direction (80).

9. Reactor (10) according to any of the preceding claims,
wherein the reactor (10) has, in the reaction channel (16), at least one mixing device (74) for, in particular passively, mixing the first reactant (12) with the second reactant (14).

10. Reactor (10) according to Claim 9,
wherein the mixing device (74) has at least one guide element (82) and/or at least one turbulence generator.

11. Reactor (10) according to any of the preceding claims, wherein the reaction channel (16) has, in at least one partial region, a cross section (76) which varies along the longitudinal extent of the reaction channel (16) and which can be flowed through at least by the first reactant (12).

12. Reactor (10) according to any of the preceding claims, wherein the medium channel (26) is delimited at one side by an inner circumferential lateral surface (58) of a housing (56) of the reactor (10) and at the other side by an outer circumferential lateral surface (60) of a channel element (62), wherein the reaction channel (16) is delimited by an inner circumferential lateral surface (64), which is averted from the outer circumferential lateral surface (60), of the channel element (62).

13. Method for producing a reactor (10) for conducting at least two reactants (12, 14), having the steps:
- producing at least one longitudinally extending reaction channel (16) which can be flowed through along its longitudinal extent by a first of the reactants (12, 14);
- producing at least one feed channel (18) which can be flowed through by the second reactant (14) and which is fluidically connected to the reaction channel (16) via multiple passage openings (22) which are spaced apart from one another and which can be flowed through by respective partial streams (20) of the second reactant (14), wherein the respective partial streams (20) of the second reactant (14) can be fed via the passage openings (22) to the reaction channel (16) and thus to the first reactant (12, 14) in order to thus allow a chemical reaction of the reactants (12, 14) to occur in the reaction channel (16); and
- producing at least one medium channel (26) which surrounds the reaction channel (16) and which can be flowed through by at least one medium (28) by means of which, owing to an exchange of heat with the reaction channel (16), at least a temperature of the reaction channel (16) can be influenced,
- **characterized in that**, in the medium channel (26), a lattice structure (68) is created which can be flowed around by the medium (28) and which has multiple rods (70) which are mechanically connected to one another at respective nodes (72) of the lattice structure (68).

## Revendications

1. Réacteur (10) de conduite d'au moins deux réactifs (12, 14), comprenant au moins un conduit (16) de réaction, qui peut être parcouru le long de son étendue longitudinale par un premier des réactifs (12, 14), comprenant au moins un conduit (18) d'apport, qui peut être parcouru par le deuxième réactif (14) et qui communique fluidiquement avec le conduit (16) de réaction par plusieurs ouvertures (22) de passage à distance les unes des autres et pouvant être parcourues par des courants (20) partiels respectifs du deuxième réactif (14) , dans lequel les courants (20) partiels respectifs du deuxième réactif (14) peuvent être apportés par les ouvertures (22) de passage au conduit (16) de réaction et ainsi au premier réactif (12) afin ainsi de faire se dérouler, dans le conduit (16) de réaction, une réaction chimique des réactifs (12, 14) et comprenant au moins un conduit (26) de fluide, qui entoure le conduit (16) de réaction et qui peut être parcouru par au moins un fluide (28) par lequel, en raison d'un échange de chaleur avec le conduit (16) de réaction, au moins une température du conduit (16) de réaction peut être influencée,
**caractérisé en ce que** le réacteur (10) a, dans le conduit (26) de milieu, une structure (68) en grille autour de laquelle peut s'écouler le fluide (28) et qui a plusieurs barreaux (70), qui sont reliés mécaniquement entre eux aux nœuds (72) respectifs de la structure (68) en grille.

2. Réacteur (10) suivant la revendication 1,
dans lequel le conduit (18) d'apport peut être parcouru dans un sens (56) d'écoulement par le deuxième réactif (14) et dans lequel les ouvertures (22) de passage sont à distance les unes des autres suivant la direction (56) d'écoulement.

3. Réacteur (10) suivant la revendication 1 ou 2,
dans lequel le réacteur (10) est constitué d'une seule pièce.

4. Réacteur (10) suivant l'une des revendications précédentes, dans lequel le réacteur (10) est fabriqué par un procédé de fabrication génératif.

5. Réacteur (10) suivant l'une des revendications précédentes, dans lequel le conduit (16) de réaction s'étend en forme d'hélice.

6. Réacteur (10) suivant la revendication 5,
dans lequel le conduit (16) de réaction s'étend en forme d'hélice autour d'au moins une partie (L) en longueur du conduit (18) d'apport.

7. Réacteur (10) suivant la revendication 6,
dans lequel au moins la partie (L) en longueur du conduit (18) d'apport s'étend en ligne droite.

8. Réacteur (10) suivant l'une des revendications 5 à 7,
dans lequel les spires (78) de la forme en hélice et ainsi du conduit (16) de réaction ayant une direction (80) d'enroulement s'étendent, de manière ondulée, le long de la direction (80) d'enroulement et/ou de manière inclinée par rapport à la direction (80) d'enroulement et/ou perpendiculairement à la direction (80) d'enroulement.

9. Réacteur (10) suivant l'une des revendications précédentes, dans lequel le réacteur (10) a, dans le conduit (16) de réaction, au moins un dispositif (74) de mélange pour le mélange, notamment passif, du premier réactif (12) au deuxième réactif (14).

10. Réacteur (10) suivant la revendication 9,
dans lequel le dispositif (74) de mélange a au moins un élément (82) de conduite et/ou au moins un dispositif producteur de turbulence.

11. Réacteur (10) suivant l'une des revendications précédentes, dans lequel le conduit (16) de réaction a, dans au moins une région partielle, une section (76) transversale se modifiant le long de l'étendue longitudinale du conduit (16) de réaction et pouvant être parcourue au moins par le premier réactif (12).

12. Réacteur (10) suivant l'une des revendications précédentes, dans lequel le conduit (26) pour le fluide est délimité d'une part par une surface (58) latérale, du côté du pourtour intérieur, d'une enveloppe (56) du réacteur (10) et d'autre part par une surface (60) latérale, du côté du pourtour extérieur, d'un élément (62) de conduit, dans lequel le conduit (16) de réaction est délimité par une surface (64) latérale de l'élément (62) de conduit, qui est du côté du pourtour intérieur et qui est loin de la surface (60) latérale du côté du pourtour extérieur.

13. Procédé de fabrication d'un réacteur (10) pour conduire au moins deux réactifs (12, 14) comprenant les stades :
- fabrication d'au moins un conduit (16) de réaction, qui s'étend longitudinalement et qui, le long de son étendue longitudinale, peut être parcouru par un premier des réactifs (12, 14) ;
- fabrication d'au moins un conduit (18) d'apport, qui peut être parcouru par le deuxième réactif (14) et qui communique fluidiquement avec le conduit (16) de réaction par plusieurs ouvertures (22) de passage à distance les unes des autres et pouvant être parcourues par des courants (20) partiels respectifs du deuxième réactif (14), dans lequel les courants (20) partiels respectifs du deuxième réactif peuvent être apportés par les ouvertures (22) de passage au conduit (16) de réaction et ainsi au premier réactif (12, 14) afin ainsi de faire se dérouler une réaction chimique des réactifs (12, 16) dans le conduit (16) de réaction ; et
- fabrication d'au moins un conduit (26) de milieu, qui entoure le conduit (16) de réaction et qui peut être parcouru par au moins un fluide (28) par lequel, en raison d'un échange de chaleur avec le conduit (16) de réaction, au moins une température du conduit (16) de réaction peut être influencé
- **caractérisé en ce que** l'on établit, dans le conduit (26) de milieu, une structure (68) en grille, qui peut être contournée par le fluide (28) et qui a plusieurs barreaux (70), qui sont reliés mécaniquement entre eux aux nœuds (72) respectifs de la structure (68) en grille.
